(19) Europäisches Patentamt
European Patent Office
Office européen des brevets

(11) **EP 3 185 630 B1**

(12) **EUROPEAN PATENT SPECIFICATION**

(45) Date of publication and mention
of the grant of the patent:
**24.07.2019 Bulletin 2019/30**

(21) Application number: **14901936.6**

(22) Date of filing: **19.09.2014**

(51) Int Cl.:
**H04W 72/04** *(2009.01)* **H04W 92/18** *(2009.01)*

(86) International application number:
**PCT/CN2014/086949**

(87) International publication number:
**WO 2016/041199 (24.03.2016 Gazette 2016/12)**

(54) **DEVICE AND METHOD FOR COEXISTENCE OF DISCOVERY SIGNAL AND CELLULAR SIGNAL**

VORRICHTUNG UND VERFAHREN FÜR CO-EXISTENZ VON ENTDECKUNGSSIGNAL UND MOBILFUNKSIGNAL

DISPOSITIF ET PROCÉDÉ DE COEXISTENCE D'UN SIGNAL DE DÉCOUVERTE ET D'UN SIGNAL CELLULAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.06.2017 Bulletin 2017/26**

(73) Proprietor: **Huawei Technologies Co., Ltd.**
**Longgang District**
**Shenzhen, Guangdong 518129 (CN)**

(72) Inventors:
• **MA, Jie**
**Shenzhen**
**Guangdong 518129 (CN)**
• **CAO, Zhenzhen**
**Shenzhen**
**Guangdong 518129 (CN)**

(74) Representative: **Gill Jennings & Every LLP**
**The Broadgate Tower**
**20 Primrose Street**
**London EC2A 2ES (GB)**

(56) References cited:
WO-A1-2013/090753     WO-A1-2013/171114
WO-A2-2011/123516     CN-A- 103 368 713
CN-A- 103 428 817       CN-A- 103 763 744
GB-A- 2 506 176          US-A1- 2014 128 089

• **NSN ET AL: "ProSe Resource Authorization", 3GPP DRAFT; C1-142775-PROSE-RESOURCEAUTHORIZATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. Cape Town, South Africa; 20140714 - 20140718 14 July 2014 (2014-07-14), XP050777817, Retrieved from the Internet: URL:http://www.3gpp.org/ftp/Meetings_3GPP_ SYNC/CT1/Docs/ [retrieved on 2014-07-14]**

**Description**

**TECHNICAL FIELD**

The present invention relates to the field of wireless communications technologies, and in particular, to a coexistence apparatus and method for a discovery signal and a cellular signal.

**BACKGROUND**

With development of a device-to-device (Device to Device, D2D for short) communication technology, more terminal devices have a D2D function, and there is also a trend in which user equipment (User Equipment, UE for short) using conventional cellular communication directly performs device-to-device communication by using a resource in a 3rd Generation Partnership Project (3rd Generation Partnership Project, 3GPP) system or a Long Term Evolution (Long Term Evolution, LTE for short) system. This type of UE is referred to as a cellular device-to-device terminal. Resources of the UE are managed by using a base station of a cellular cell to which the UE belongs, and include a discovery (Discovery) resource and a cellular resource that are separate in a time domain. That is, the cellular device-to-device terminal performs communication in a time division duplex mode. The cellular device-to-device terminal receives a discovery signal from or sends a discovery signal to another cellular device-to-device terminal by using the discovery resource. The cellular device-to-device terminal receives a cellular signal from or sends a cellular signal to the base station by using the cellular resource.

However, when the cellular device-to-device terminal is handed over between cells or when there is a resource shortage, a discovery resource and a cellular resource that are allocated by the base station to the terminal may collide in the time domain. When such a collision occurs, the base station cannot identify that there is such a collision between the discovery resource and the cellular resource that are allocated to the terminal, and the cellular device-to-device terminal in the prior art cannot simultaneously transmit a discovery signal corresponding to the sending resource and a cellular signal corresponding to the cellular resource. Consequently, D2D communication and cellular communication of the terminal cannot be properly performed, and stability of D2D communication and cellular communication is reduced.

WO 2011/123516 A2 describes an approach to determining a communications mode at a control node. WO 2013/171114 A1 describes an approach to setting to D2D communication. GB 2506176 A describes mitigation of potential interferences between D2D and cellular communications.

**SUMMARY**

The object of the present invention is achieved by the features of the appended independent claims. The present invention provides a coexistence apparatus, method, and system for a discovery signal and a cellular signal, so as to improve stability of D2D communication and cellular communication.

A first aspect of the present invention provides a base station, including:

a receiving module, configured to receive a communications mode request indication sent by user equipment UE, where
the communications mode request indication is used to indicate a communications mode that the UE needs to use, and the communications mode includes device-to-device D2D communication or cellular communication;
a processing module, configured to determine, according to the communications mode request indication, a communications mode used by the UE; and
a sending module, configured to send, to the UE, information about the determined communications mode used by the UE.

With reference to the first aspect, in a first possible implementation manner, the processing module is further configured to: if an attribute of a service currently performed by the UE meets a first switching condition, determine that the UE can switch to the communications mode indicated by the communications mode request indication; or
the processing module is further configured to: if an attribute of a service currently performed by the UE and the preset service priority meet a second switching condition, determine that the UE can switch to the communications mode indicated by the communications mode request indication.

With reference to the first aspect or the first possible implementation manner of the first aspect, in a second possible implementation manner, the receiving module is specifically configured to receive an RRC connection setup complete message sent by the UE, where the RRC connection setup complete message includes a discovery signal reception indication, and the discovery signal reception indication is used to indicate that the UE is performing D2D communication; and

the processing module is specifically configured to determine, according to the discovery signal reception indication, that the communications mode used by the UE is cellular communication.

With reference to the first aspect or any one of the foregoing possible implementation manners of the first aspect, in a third possible implementation manner, the processing module is further configured to: if a downlink signal in D2D communication and a downlink signal in cellular communication overlap at a time domain location of a resource, displace a subframe corresponding to the downlink signal in cellular communication, so that the downlink signal in D2D communication and the downlink signal in cellular communication are set at different time domain locations of the resource; and

the sending module is further configured to send a downlink signal subframe displacement indication to the UE, where the downlink signal subframe displacement indication is used to notify the UE that the subframe corresponding to the downlink signal in cellular communication has been displaced, so that the UE receives, at the different time domain locations of the resource, the downlink signal in D2D communication and/or the downlink signal in cellular communication according to the downlink signal subframe displacement indication.

With reference to the first aspect, or the first possible implementation manner of the first aspect, or the second possible implementation manner of the first aspect, in a fourth possible implementation manner, the receiving module is further configured to receive an uplink signal subframe displacement indication sent by the UE, where the uplink signal subframe displacement indication is used to indicate that when an uplink signal in D2D communication and an uplink signal in cellular communication overlap at a time domain location of a resource, the UE has displaced a subframe corresponding to the uplink signal in cellular communication, so that the uplink signal in D2D communication and the uplink signal in cellular communication are set at different time domain locations of the resource; and

the receiving module is further configured to receive, at the different time domain locations of the resource, the uplink signal in D2D communication and/or the uplink signal in cellular communication according to the uplink signal subframe displacement indication.

With reference to the third possible implementation manner of the first aspect or the second possible implementation manner of the first aspect, in a fifth possible implementation manner, the resource is a semi-persistent scheduling resource.

A second aspect of the present invention provides user equipment, including:

a sending module, configured to send a communications mode request indication to a base station, where the communications mode request indication is used to indicate a communications mode that the UE needs to use, and the communications mode includes device-to-device D2D communication or cellular communication;

a receiving module, configured to receive information that is sent by the base station and is about a determined communications mode used by the UE, where the information is determined by the base station according to the communications mode request indication, and the information is corresponding to the communications mode that is used by the UE and that is determined by the base station; and

a processing module, configured to perform communication by using the communications mode corresponding to the information.

With reference to the second aspect, in a first possible implementation manner, the processing module is further configured to update communication status information, where the communication status information is used to indicate a communications mode that the UE needs to use.

With reference to the second aspect or the first possible implementation manner of the second aspect, in a second possible implementation manner, the sending module is further configured to send an RRC connection setup complete message to the base station, where the RRC connection setup complete message includes a discovery signal reception indication, and the discovery signal reception indication is used to indicate that the UE is performing D2D communication; and

the receiving module is specifically configured to receive the information that is sent by the base station and is about the determined communications mode used by the UE, where the information is corresponding to cellular communication.

With reference to the second aspect or any one of the foregoing possible implementation manners of the second aspect, in a third possible implementation manner, the receiving module is further configured to receive a downlink signal subframe displacement indication sent by the base station, where the downlink signal subframe displacement indication is used to indicate that when a downlink signal in D2D communication and a downlink signal in cellular communication overlap at a time domain location of a resource, the base station has displaced a subframe corresponding to the downlink signal in cellular communication, so that the downlink signal in D2D communication and the downlink signal in cellular communication are set at different time domain locations of the resource; and

the receiving module is further configured to receive, at the different time domain locations of the resource, the downlink signal in D2D communication and/or the downlink signal in cellular communication according to the downlink signal subframe displacement indication.

With reference to the first possible implementation manner of the second aspect or the second possible implementation manner of the second aspect, in a fourth possible implementation manner, the processing module is further configured to: if an uplink signal in D2D communication and an uplink signal in cellular communication overlap at a time domain location of a resource, displace a subframe corresponding to the uplink signal in cellular communication, so that the uplink signal in D2D communication and the uplink signal in cellular communication are set at different time domain locations of the resource; and

the sending module is further configured to send an uplink signal subframe displacement indication to the base station, where the uplink signal subframe displacement indication is used to indicate that the subframe corresponding to the uplink signal in cellular communication has been displaced.

With reference to the first possible implementation manner of the second aspect or the second possible implementation manner of the second aspect, in a fourth possible implementation manner, the resource is a semi-persistent scheduling resource.

A third aspect of the present invention provides a base station, including:

a processing module, configured to: determine that a time domain resource corresponding to a paging frame and a time domain resource corresponding to a discovery frame do not overlap; and if the time domain resource corresponding to the paging frame and the time domain resource corresponding to the discovery frame overlap, set the time domain resource corresponding to the paging frame and the time domain resource corresponding to the discovery frame to be non-overlapping; and

a sending module, configured to: deliver reception information corresponding to the discovery frame to user equipment UE, or deliver reception information corresponding to the paging frame to the UE, where the reception information corresponding to the discovery frame is used to instruct the UE to perform only discovery communication on the time domain resource corresponding to the discovery frame, and the reception information corresponding to the paging frame is used to instruct the UE to perform only paging communication on the time domain resource corresponding to the paging frame.

With reference to the third aspect, in a first possible implementation manner, the processing module is specifically configured to: if the time domain resource corresponding to the paging frame and the time domain resource corresponding to the discovery frame overlap, determine that the time domain resource corresponding to the discovery frame is used only for performing discovery communication.

A fourth aspect of the present invention provides user equipment, including:

a receiving module, configured to: receive reception information that is corresponding to the discovery frame and is delivered by the base station, where the reception information corresponding to the discovery frame is used to instruct the UE to perform only discovery communication on a time domain resource corresponding to the discovery frame; or receive reception information that is corresponding to a paging frame and is delivered by the base station, where the reception information corresponding to the paging frame is used to instruct the UE to perform only paging communication on a time domain resource corresponding to the paging frame; and

a communications module, configured to: perform discovery communication on the time domain resource corresponding to the discovery frame, or perform paging communication on the time domain resource corresponding to the paging frame, where

the time domain resource corresponding to the paging frame and the time domain resource corresponding to the discovery frame do not overlap.

With reference to the fourth aspect, in a first possible implementation manner, the communications module is specifically configured to: receive, on the time domain resource corresponding to the discovery frame, a discovery signal sent by another UE, or send a discovery signal to the another UE on the time domain resource corresponding to the discovery frame; or

is specifically configured to: receive, on the time domain resource corresponding to the paging frame, a paging signal sent by the base station, or send a paging signal to the base station on the time domain resource corresponding to the paging frame.

A fifth aspect of the present invention provides a base station, including:

a receiver, configured to receive a communications mode request indication sent by user equipment UE, where the communications mode request indication is used to indicate a communications mode that the UE needs to use, and the communications mode includes device-to-device D2D communication or cellular communication;

a processor, configured to determine, according to the communications mode request indication, a communications mode used by the UE; and

a transmitter, configured to send, to the UE, information about the determined communications mode used by the UE.

With reference to the fifth aspect, in a first possible implementation manner, the processor is further configured to: if an attribute of a service currently performed by the UE meets a first switching condition, determine that the UE can switch to the communications mode indicated by the communications mode request indication; or
the processor is further configured to: if an attribute of a service currently performed by the UE and the preset service priority meet a second switching condition, determine that the UE can switch to the communications mode indicated by the communications mode request indication.

With reference to the fifth aspect or the first possible implementation manner of the fifth aspect, in a second possible implementation manner, the receiver is specifically configured to receive an RRC connection setup complete message sent by the UE, where the RRC connection setup complete message includes a discovery signal reception indication, and the discovery signal reception indication is used to indicate that the UE is performing D2D communication; and
the processor is specifically configured to determine, according to the discovery signal reception indication, that the communications mode used by the UE is cellular communication.

With reference to the fifth aspect or any one of the foregoing possible implementation manners of the fifth aspect, in a third possible implementation manner, the processor is further configured to: if a downlink signal in D2D communication and a downlink signal in cellular communication overlap at a time domain location of a resource, displace a subframe corresponding to the downlink signal in cellular communication, so that the downlink signal in D2D communication and the downlink signal in cellular communication are set at different time domain locations of the resource; and
the transmitter is further configured to send a downlink signal subframe displacement indication to the UE, where the downlink signal subframe displacement indication is used to notify the UE that the subframe corresponding to the downlink signal in cellular communication has been displaced, so that the UE receives, at the different time domain locations of the resource, the downlink signal in D2D communication and/or the downlink signal in cellular communication according to the downlink signal subframe displacement indication.

With reference to the fifth aspect, or the first possible implementation manner of the fifth aspect, or the second possible implementation manner of the fifth aspect, in a fourth possible implementation manner, the receiver is further configured to receive an uplink signal subframe displacement indication sent by the UE, where the uplink signal subframe displacement indication is used to indicate that when an uplink signal in D2D communication and an uplink signal in cellular communication overlap at a time domain location of a resource, the UE has displaced a subframe corresponding to the uplink signal in cellular communication, so that the uplink signal in D2D communication and the uplink signal in cellular communication are set at different time domain locations of the resource; and
the receiver is further configured to receive, at the different time domain locations of the resource, the uplink signal in D2D communication and/or the uplink signal in cellular communication according to the uplink signal subframe displacement indication.

With reference to the third possible implementation manner of the fifth aspect or the second possible implementation manner of the fourth aspect, in a fifth possible implementation manner, the resource is a semi-persistent scheduling resource.

A sixth aspect of the present invention provides user equipment, including:

a transmitter, configured to send a communications mode request indication to a base station, where
the communications mode request indication is used to indicate a communications mode that the UE needs to use, and the communications mode includes device-to-device D2D communication or cellular communication;
a receiver, configured to receive information that is sent by the base station and is about a determined communications mode used by the UE, where the information is determined by the base station according to the communications mode request indication, and the information is corresponding to the communications mode that is used by the UE and that is determined by the base station; and
a processor, configured to perform communication by using the communications mode corresponding to the information.

With reference to the sixth aspect, in a first possible implementation manner, the processor is further configured to update communication status information, where the communication status information is used to indicate a communications mode that the UE needs to use.

With reference to the sixth aspect or the first possible implementation manner of the sixth aspect, in a second possible implementation manner, the transmitter is further configured to send an RRC connection setup complete message to the base station, where the RRC connection setup complete message includes a discovery signal reception indication, and the discovery signal reception indication is used to indicate that the UE is performing D2D communication; and

the receiver is specifically configured to receive the information that is sent by the base station and is about the determined communications mode used by the UE, where the information is corresponding to cellular communication.

With reference to the sixth aspect or any one of the foregoing possible implementation manners of the sixth aspect, in a third possible implementation manner, the receiver is further configured to receive a downlink signal sub frame displacement indication sent by the base station, where the downlink signal subframe displacement indication is used to indicate that when a downlink signal in D2D communication and a downlink signal in cellular communication overlap at a time domain location of a resource, the base station has displaced a subframe corresponding to the downlink signal in cellular communication, so that the downlink signal in D2D communication and the downlink signal in cellular communication are set at different time domain locations of the resource; and

the receiver is further configured to receive, at the different time domain locations of the resource, the downlink signal in D2D communication and/or the downlink signal in cellular communication according to the downlink signal subframe displacement indication.

With reference to the first possible implementation manner of the sixth aspect or the second possible implementation manner of the sixth aspect, in a fourth possible implementation manner, the processor is further configured to: if an uplink signal in D2D communication and an uplink signal in cellular communication overlap at a time domain location of a resource, displace a subframe corresponding to the uplink signal in cellular communication, so that the uplink signal in D2D communication and the uplink signal in cellular communication are set at different time domain locations of the resource; and

the transmitter is further configured to send an uplink signal subframe displacement indication to the base station, where the uplink signal subframe displacement indication is used to indicate that the subframe corresponding to the uplink signal in cellular communication has been displaced.

With reference to the first possible implementation manner of the sixth aspect or the second possible implementation manner of the sixth aspect, in a fourth possible implementation manner, the resource is a semi-persistent scheduling resource.

A seventh aspect of the present invention provides a base station, including:

a processor, configured to: determine that a time domain resource corresponding to a paging frame and a time domain resource corresponding to a discovery frame do not overlap; and if the time domain resource corresponding to the paging frame and the time domain resource corresponding to the discovery frame overlap, set the time domain resource corresponding to the paging frame and the time domain resource corresponding to the discovery frame to be non-overlapping; and

a transmitter, configured to: deliver reception information corresponding to the discovery frame to user equipment UE, or deliver reception information corresponding to the paging frame to the UE, where the reception information corresponding to the discovery frame is used to instruct the UE to perform only discovery communication on the time domain resource corresponding to the discovery frame, and the reception information corresponding to the paging frame is used to instruct the UE to perform only paging communication on the time domain resource corresponding to the paging frame.

With reference to the seventh aspect, in a first possible implementation manner, the processor is specifically configured to: if the time domain resource corresponding to the paging frame and the time domain resource corresponding to the discovery frame overlap, determine that the time domain resource corresponding to the discovery frame is used only for performing discovery communication.

An eighth aspect of the present invention provides user equipment, including:

a processor, a memory, and a system bus, where the processor and the memory are connected and implement mutual communication by using the system bus;

the memory is configured to store a computer execution instruction;

the processor is configured to run the computer execution instruction, so that the coexistence apparatus for a discovery signal and a cellular signal receives reception information that is corresponding to the discovery frame and is delivered by the base station, where the reception information corresponding to the discovery frame is used to instruct the UE to perform only discovery communication on a time domain resource corresponding to the discovery frame; or receives reception information that is corresponding to a paging frame and is delivered by the base station, where the reception information corresponding to the paging frame is used to instruct the UE to perform only paging communication on a time domain resource corresponding to the paging frame; and

the processor is further configured to: perform discovery communication on the time domain resource corresponding to the discovery frame, or perform paging communication on the time domain resource corresponding to the paging frame, where

the time domain resource corresponding to the paging frame and the time domain resource corresponding to the discovery frame do not overlap.

With reference to the eighth aspect, in a first possible implementation manner, the processor is specifically configured to: receive, on the time domain resource corresponding to the discovery frame, a discovery signal sent by another UE, or send a discovery signal to the another UE on the time domain resource corresponding to the discovery frame; or

is specifically configured to: receive, on the time domain resource corresponding to the paging frame, a paging signal sent by the base station, or send a paging signal to the base station on the time domain resource corresponding to the paging frame.

A ninth aspect of the present invention provides a coexistence system for a discovery signal and a cellular signal, including: at least one base station according to the first aspect or any one of feasible implementation manners of the first aspect and at least one user equipment according to the second aspect or any one of feasible implementation manners of the second aspect.

A tenth aspect of the present invention provides a coexistence system for a discovery signal and a cellular signal, including: at least one base station according to the third aspect or any one of feasible implementation manners of the third aspect and at least one user equipment according to the fourth aspect or any one of feasible implementation manners of the fourth aspect.

An eleventh aspect of the present invention provides a coexistence system for a discovery signal and a cellular signal, including: at least one base station according to the fifth aspect or any one of feasible implementation manners of the fifth aspect and at least one user equipment according to the sixth aspect or any one of feasible implementation manners of the sixth aspect.

A twelfth aspect of the present invention provides a coexistence system for a discovery signal and a cellular signal, including: at least one base station according to the seventh aspect or any one of feasible implementation manners of the seventh aspect and at least one user equipment according to the eighth aspect or any one of feasible implementation manners of the eighth aspect.

A thirteenth aspect of the present invention provides a coexistence method for a discovery signal and a cellular signal, including:

receiving a communications mode request indication sent by user equipment UE, where the communications mode request indication is used to indicate a communications mode that the UE needs to use, and the communications mode includes device-to-device D2D communication or cellular communication;
determining, according to the communications mode request indication, a communications mode used by the UE; and
sending, to the UE, information about the determined communications mode used by the UE.

With reference to the thirteenth aspect, in a first possible implementation manner, before the determining, according to the communications mode request indication, a communications mode used by the UE, the method further includes:

if an attribute of a service currently performed by the UE meets a first switching condition, determining that the UE can switch to the communications mode indicated by the communications mode request indication; or
if an attribute of a service currently performed by the UE and the preset service priority meet a second switching condition, determining that the UE can switch to the communications mode indicated by the communications mode request indication.

With reference to the thirteenth aspect or the first possible implementation manner of the thirteenth aspect, in a second possible implementation manner, the receiving a communications mode request indication sent by user equipment UE includes:

receiving an RRC connection setup complete message sent by the UE, where the RRC connection setup complete message includes a discovery signal reception indication, and the discovery signal reception indication is used to indicate that the UE is performing D2D communication; and
the determining, according to the communications mode request indication, a communications mode used by the UE includes:
determining, according to the discovery signal reception indication, that the communications mode used by the UE is cellular communication.

With reference to the thirteenth aspect or any one of the foregoing possible implementation manners of the thirteenth aspect, in a third possible implementation manner, the method further includes:

if a downlink signal in D2D communication and a downlink signal in cellular communication overlap at a time domain location of a resource, displacing a subframe corresponding to the downlink signal in cellular communication, so that the downlink signal in D2D communication and the downlink signal in cellular communication are set at different time domain locations of the resource; and

sending a downlink signal subframe displacement indication to the UE, where the downlink signal subframe displacement indication is used to notify the UE that the subframe corresponding to the downlink signal in cellular communication has been displaced, so that the UE receives, at the different time domain locations of the resource, the downlink signal in D2D communication and/or the downlink signal in cellular communication according to the downlink signal subframe displacement indication.

With reference to the thirteenth aspect, or the first possible implementation manner of the thirteenth aspect, or the second possible implementation manner of the thirteenth aspect, in a fourth possible implementation manner, the method further includes:

receiving an uplink signal subframe displacement indication sent by the UE, where the uplink signal subframe displacement indication is used to indicate that when an uplink signal in D2D communication and an uplink signal in cellular communication overlap at a time domain location of a resource, the UE has displaced a subframe corresponding to the uplink signal in cellular communication, so that the uplink signal in D2D communication and the uplink signal in cellular communication are set at different time domain locations of the resource; and

receiving, at different time domain locations of the resource, the uplink signal in D2D communication and/or the uplink signal in cellular communication according to the uplink signal subframe displacement indication.

With reference to the third possible implementation manner of the thirteenth aspect or the second possible implementation manner of the thirteenth aspect, in a fifth possible implementation manner, the resource is a semi-persistent scheduling resource.

A fourteenth aspect of the present invention provides a coexistence method for a discovery signal and a cellular signal, including:

sending, by user equipment UE, a communications mode request indication to a base station, where the communications mode request indication is used to indicate a communications mode that the UE needs to use, and the communications mode includes device-to-device D2D communication or cellular communication;

receiving, by the UE, information that is sent by the base station and is about a determined communications mode used by the UE, where the information is determined by the base station according to the communications mode request indication, and the information is corresponding to the communications mode that is used by the UE and that is determined by the base station; and

performing, by the UE, communication by using the communications mode corresponding to the information.

With reference to the fourteenth aspect, in a first possible implementation manner, before the sending, by user equipment UE, a communications mode request indication to a base station, the method further includes:

updating, by the UE, communication status information, where the communication status information is used to indicate a communications mode that the UE needs to use.

With reference to the fourteenth aspect or the first possible implementation manner of the fourteenth aspect, in a second possible implementation manner, the sending, by user equipment UE, a communications mode request indication to a base station includes:

sending, by the UE, an RRC connection setup complete message to the base station, where the RRC connection setup complete message includes a discovery signal reception indication, and the discovery signal reception indication is used to indicate that the UE is performing D2D communication; and

the receiving, by the UE, information that is sent by the base station and is about a determined communications mode used by the UE includes:

receiving, by the UE, the information that is sent by the base station and is about the determined communications mode used by the UE, where the information is corresponding to cellular communication.

With reference to the fourteenth aspect or any one of the foregoing possible implementation manners of the fourteenth aspect, in a third possible implementation manner, the method further includes:

receiving a downlink signal subframe displacement indication sent by the base station, where the downlink signal subframe displacement indication is used to indicate that when a downlink signal in D2D communication and a downlink signal in cellular communication overlap at a time domain location of a resource, the base station has displaced a subframe corresponding to the downlink signal in cellular communication, so that the downlink signal in D2D communication and the downlink signal in cellular communication are set at different time domain locations of the resource; and

receiving, at different time domain locations of the resource, the downlink signal in D2D communication and/or the downlink signal in cellular communication according to the downlink signal subframe displacement indication.

With reference to the first possible implementation manner of the fourteenth aspect or the second possible implementation manner of the fourteenth aspect, in a fourth possible implementation manner, the method further includes:

if an uplink signal in D2D communication and an uplink signal in cellular communication overlap at a time domain location of a resource, displacing a subframe corresponding to the uplink signal in cellular communication, so that the uplink signal in D2D communication and the uplink signal in cellular communication are set at different time domain locations of the resource; and

sending an uplink signal subframe displacement indication to the base station, where the uplink signal subframe displacement indication is used to indicate that the subframe corresponding to the uplink signal in cellular communication has been displaced.

With reference to the first possible implementation manner of the fourteenth aspect or the second possible implementation manner of the fourteenth aspect, in a fourth possible implementation manner, the resource is a semi-persistent scheduling resource.

A fifteenth aspect of the present invention provides a coexistence method for a discovery signal and a cellular signal, including:

determining whether a time domain resource corresponding to a paging frame and a time domain resource corresponding to a discovery frame overlap;

setting the time domain resource corresponding to the paging frame and the time domain resource corresponding to the discovery frame to be non-overlapping if the time domain resource corresponding to the paging frame and the time domain resource corresponding to the discovery frame overlap; and

delivering reception information corresponding to the discovery frame to user equipment UE, or delivering reception information corresponding to the paging frame to the UE, where the reception information corresponding to the discovery frame is used to instruct the UE to perform only discovery communication on the time domain resource corresponding to the discovery frame, and the reception information corresponding to the paging frame is used to instruct the UE to perform only paging communication on the time domain resource corresponding to the paging frame.

With reference to the fifteenth aspect, in a first possible implementation manner, the setting the time domain resource corresponding to the paging frame and the time domain resource corresponding to the discovery frame to be non-overlapping if the time domain resource corresponding to the paging frame and the time domain resource corresponding to the discovery frame overlap includes:

if the time domain resource corresponding to the paging frame and the time domain resource corresponding to the discovery frame overlap, determining that the time domain resource corresponding to the discovery frame is used only for performing discovery communication.

A sixteenth aspect of the present invention provides a coexistence method for a discovery signal and a cellular signal, including:

receiving, by user equipment UE, reception information that is corresponding to the discovery frame and is delivered by the base station, where the reception information corresponding to the discovery frame is used to instruct the UE to perform only discovery communication on a time domain resource corresponding to the discovery frame; and performing, by the UE, discovery communication on the time domain resource corresponding to the discovery frame; or

receiving, by the UE, reception information that is corresponding to a paging frame and is delivered by the base station, where the reception information corresponding to the paging frame is used to instruct the UE to perform only paging communication on a time domain resource corresponding to the paging frame; and performing, by the UE, paging communication on the time domain resource corresponding to the paging frame, where

the time domain resource corresponding to the paging frame and the time domain resource corresponding to the discovery frame do not overlap.

With reference to the sixteenth aspect, in a first possible implementation manner, the performing, by the UE, discovery communication on the time domain resource corresponding to the discovery frame includes:

receiving, by the UE on the time domain resource corresponding to the discovery frame, a discovery signal sent by another UE, or sending, by the UE, a discovery signal to the another UE on the time domain resource corresponding to the discovery frame; or
the performing, by the UE, paging communication on the time domain resource corresponding to the paging frame includes:
receiving, by the UE on the time domain resource corresponding to the paging frame, a paging signal sent by the base station, or sending, by the UE, a paging signal to the base station on the time domain resource corresponding to the paging frame.

According to the coexistence apparatus, method, and system for a discovery signal and a cellular signal that are provided in the embodiments of the present invention, a receiving module receives a communications mode request indication sent by user equipment UE, where the communications mode request indication is used to indicate a communications mode that the UE needs to use, and the communications mode includes device-to-device D2D communication or cellular communication; a processing module determines, according to the communications mode request indication, a communications mode used by the UE; and a sending module sends, to the UE, information about the determined communications mode used by the UE. In this way, UE is instructed, according to a communications mode request indication reported by the UE, to perform either discovery signal communication or cellular signal communication, so that a collision between two communication manners of the UE is avoided, and stability of D2D communication and cellular communication of the UE is improved.

**BRIEF DESCRIPTION OF DRAWINGS**

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.

FIG. 1 is a schematic structural diagram of a base station according to an embodiment of the present invention;
FIG. 2 is a schematic structural diagram of another user equipment according to an embodiment of the present invention;
FIG. 3 is a schematic structural diagram of another base station according to an embodiment of the present invention;
FIG. 4 is a schematic structural diagram of another user equipment according to an embodiment of the present invention;
FIG. 5 is a schematic structural diagram of another base station according to an embodiment of the present invention;
FIG. 6 is a schematic structural diagram of another user equipment according to an embodiment of the present invention;
FIG. 7 is a schematic structural diagram of another base station according to an embodiment of the present invention;
FIG. 8 is a schematic structural diagram of another user equipment according to an embodiment of the present invention;
FIG. 9 is a schematic flowchart of a coexistence method for a discovery signal and a cellular signal according to an embodiment of the present invention;
FIG. 10 is a schematic flowchart of another coexistence method for a discovery signal and a cellular signal according to an embodiment of the present invention;
FIG. 11 is a schematic flowchart of another coexistence method for a discovery signal and a cellular signal according to an embodiment of the present invention;
FIG. 12 is a schematic flowchart of another communications mode determining method according to an embodiment of the present invention;
FIG. 13 is a schematic flowchart of another communications mode determining method according to an embodiment of the present invention;
FIG. 14 to FIG. 16 are schematic diagrams of sub frame displacement according to an embodiment of the present invention;
FIG. 17 is a schematic flowchart of another coexistence method for a discovery signal and a cellular signal according to an embodiment of the present invention;
FIG. 18 is a schematic flowchart of another coexistence method for a discovery signal and a cellular signal according to an embodiment of the present invention;

FIG. 19 is a schematic flowchart of another coexistence method for a discovery signal and a cellular signal according to an embodiment of the present invention; and

FIG. 20 is a schematic flowchart of another coexistence method for a discovery signal and a cellular signal according to an embodiment of the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

When an evolved NodeB (evolved NodeB, eNB for short) supports D2D communication of a terminal, after the eNB sets up a link with UE, a proximity service (Prose) module of the UE that supports D2D communication sends an instruction to a radio access network (Radio Access Network, RAN for short) module, to request reception of a discovery (discovery) signal in D2D communication. In this case, because the foregoing UE can receive only either a cellular downlink signal or a D2D discovery signal at one moment, some technical measures are required, so as to ensure that the UE receives either the cellular downlink signal or the D2D discovery signal.

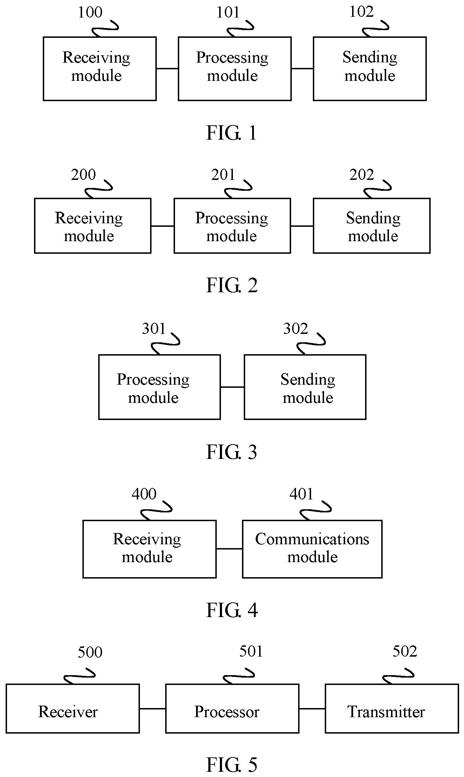

By using specific embodiments, the following provides a coexistence apparatus and system for a discovery signal and a cellular signal, so as to avoid a collision between a sending signal and a cellular signal, and avoid reduced communication stability caused by the collision. FIG. 1 is a schematic structural diagram of a base station according to an embodiment of the present invention. The base station may be an eNB, a small cell, a relay device, or the like. Unless otherwise described, an eNB is used as an example in the following embodiment for description. Referring to FIG. 1, the apparatus includes: a receiving module 100, a processing module 101, and a sending module 102.

The receiving module 100 is configured to receive a communications mode request indication sent by user equipment UE.

The communications mode request indication is used to indicate a communications mode that the UE needs to use, and the communications mode includes device-to-device D2D communication or cellular communication.

The processing module 101 is configured to determine, according to the communications mode request indication, a communications mode used by the UE.

The sending module 102 is configured to send, to the UE, information about the determined communications mode used by the UE.

According to the base station provided in this embodiment of the present invention, a receiving module receives a communications mode request indication sent by user equipment UE, where the communications mode request indication is used to indicate a communications mode that the UE needs to use, and the communications mode includes device-to-device D2D communication or cellular communication; a processing module determines, according to the communications mode request indication, a communications mode used by the UE; and a sending module sends, to the UE, information about the determined communications mode used by the UE. In this way, UE is instructed, according to a communications mode request indication reported by the UE, to perform either discovery signal communication or cellular signal communication, so that a collision between two communication manners of the UE is avoided, and stability of D2D communication and cellular communication of the UE is improved.

Preferably, according to the communications mode request indication, the processing module 101 is further configured to: if an attribute of a service currently performed by the UE meets a first switching condition, determine that the UE can switch to the communications mode indicated by the communications mode request indication; or

the processing module 101 is further configured to: if an attribute of a service currently performed by the UE and the preset service priority meet a second switching condition, determine that the UE can switch to the communications mode indicated by the communications mode request indication.

Further, a feasible implementation manner in which the receiving module 100 receives the communications mode request indication sent by the user equipment UE is as follows:

The receiving module 100 is specifically configured to receive an RRC connection setup complete message sent by the UE, where the RRC connection setup complete message includes a discovery signal reception indication, and the discovery signal reception indication is used to indicate that the UE is performing D2D communication.

Correspondingly, the processing module 101 is specifically configured to determine, according to the discovery signal reception indication, that the communications mode used by the UE is cellular communication.

Optionally, to avoid a collision between a downlink signal in D2D communication and a downlink signal in cellular communication,

the processing module 101 is further configured to: if the downlink signal in D2D communication and the downlink signal in cellular communication overlap at a time domain location of a resource, displace a subframe corresponding to the downlink signal in cellular communication, so that the downlink signal in D2D communication and the downlink signal in cellular communication are set at different time domain locations of the resource; and

the sending module 102 is further configured to send a downlink signal subframe displacement indication to the UE, where the downlink signal subframe displacement indication is used to notify the UE that the subframe corresponding to the downlink signal in cellular communication has been displaced, so that the UE receives, at the different time domain locations of the resource, the downlink signal in D2D communication and/or the downlink signal in cellular communication according to the downlink signal subframe displacement indication.

To avoid a collision between an uplink signal in D2D communication and an uplink signal in cellular communication,

the receiving module 100 is further configured to receive an uplink signal subframe displacement indication sent by the UE, where the uplink signal subframe displacement indication is used to indicate that when the uplink signal in D2D communication and the uplink signal in cellular communication overlap at a time domain location of a resource, the UE has displaced a subframe corresponding to the uplink signal in cellular communication, so that the uplink signal in D2D communication and the uplink signal in cellular communication are set at different time domain locations of the resource; and

the receiving module 100 is further configured to receive, at the different time domain locations of the resource, the uplink signal in D2D communication and/or the uplink signal in cellular communication according to the uplink signal subframe displacement indication.

Specifically, the resource is a semi-persistent scheduling resource, so that the UE delays, based on a characteristic of the semi-persistent scheduling resource, receiving a signal in cellular communication.

FIG. 2 is a schematic structural diagram of another user equipment according to an embodiment of the present invention. The user equipment may be a mobile phone, a terminal device having a cellular device-to-device function, or the like. Referring to FIG. 2, the apparatus includes: a receiving module 200, a processing module 201, and a sending module 202.

The sending module 202 is configured to send a communications mode request indication to a base station.

The communications mode request indication is used to indicate a communications mode that the UE needs to use, and the communications mode includes device-to-device D2D communication or cellular communication.

The receiving module 200 is configured to receive information that is sent by the base station and is about a determined communications mode used by the UE, where the information is determined by the base station according to the communications mode request indication, and the information is corresponding to the communications mode that is used by the UE and that is determined by the base station.

The processing module 201 is configured to perform communication by using the communications mode corresponding to the information.

According to the user equipment provided in this embodiment of the present invention, a sending module sends a communications mode request indication to a base station, where the communications mode request indication is used to indicate a communications mode that the UE needs to use, and the communications mode includes device-to-device D2D communication or cellular communication; a receiving module receives information that is sent by the base station and is about a determined communications mode used by the UE, where the information is determined by the base station according to the communications mode request indication, and the information is corresponding to the communications mode that is used by the UE and that is determined by the base station; and a processing module performs communication by using the communications mode corresponding to the information. In this way, UE performs either discovery signal communication or cellular signal communication, so that a collision between two communication manners of the UE is avoided, and stability of D2D communication and cellular communication of the UE is improved.

Preferably, before the sending module 202 sends a report message to the base station, the processing module 201 is further configured to update communication status information, where the communication status information is used to indicate a communications mode that the UE needs to use.

Preferably, when D2D communication is being performed and a radio resource control RRC connection needs to be set up, the sending module 202 is specifically configured to send an RRC connection setup complete message to the base station, that is, the RRC connection setup complete message is an implementation form of the communications mode request indication. The RRC connection setup complete message includes a discovery signal reception indication, and the discovery signal reception indication is used to indicate that the UE is performing D2D communication.

The receiving module 200 is specifically configured to receive the information that is sent by the base station and is about the determined communications mode used by the UE, where the information is corresponding to cellular communication.

Optionally, to avoid a collision between a downlink signal in D2D communication and a downlink signal in cellular communication,

the receiving module 200 is further configured to receive a downlink signal subframe displacement indication sent by the base station, where the downlink signal subframe displacement indication is used to indicate that when the downlink signal in D2D communication and the downlink signal in cellular communication overlap at a time domain location of a resource, the base station has displaced a subframe corresponding to the downlink signal in cellular communication, so that the downlink signal in D2D communication and the downlink signal in cellular communication are set at different time domain locations of the resource; and

the receiving module 200 is further configured to receive, at the different time domain locations of the resource, the downlink signal in D2D communication and/or the downlink signal in cellular communication according to the downlink signal subframe displacement indication.

To avoid a collision between an uplink signal in D2D communication and an uplink signal in cellular communication,

the processing module 201 is further configured to: if the uplink signal in D2D communication and the uplink signal in cellular communication overlap at a time domain location of a resource, displace a subframe corresponding to the uplink signal in cellular communication, so that the uplink signal in D2D communication and the uplink signal in cellular communication are set at different time domain locations of the resource; and

the sending module 202 is further configured to send an uplink signal subframe displacement indication to the base station, where the uplink signal subframe displacement indication is used to indicate that the subframe corresponding to the uplink signal in cellular communication has been displaced.

A time domain location of a resource corresponding to a signal in cellular communication and a time domain location of a resource corresponding to a signal in D2D communication do not overlap each other. The resource is a semi-persistent scheduling resource.

Further, when UE having a D2D communication function is receiving a discovery signal, the UE needs to receive a paging channel of a network to determine whether the UE is paged. To avoid a collision between a paging signal in cellular communication and a discovery signal in D2D communication, the following embodiment of the present invention provides a coexistence apparatus for a discovery signal and a cellular signal. FIG. 3 is a schematic structural diagram of another base station according to an embodiment of the present invention. The base station can also perform functions and corresponding technical effects of the foregoing apparatus shown in FIG. 1. Referring to FIG. 3, the base station includes: a processing module 301 and a sending module 302.

The processing module 301 is configured to: determine that a time domain resource corresponding to a paging frame and a time domain resource corresponding to a discovery frame do not overlap; and if the time domain resource corresponding to the paging frame and the time domain resource corresponding to the discovery frame overlap, set the time domain resource corresponding to the paging frame and the time domain resource corresponding to the discovery frame to be non-overlapping.

The sending module 302 is configured to: deliver reception information corresponding to the discovery frame to user equipment UE, or deliver reception information corresponding to the paging frame to the UE, where the reception information corresponding to the discovery frame is used to instruct the UE to perform only discovery communication on the time domain resource corresponding to the discovery frame, and the reception information corresponding to the paging frame is used to instruct the UE to perform only paging communication on the time domain resource corresponding to the paging frame.

According to the base station provided in this embodiment of the present invention, a processing module determines that a time domain resource corresponding to a paging frame and a time domain resource corresponding to a discovery frame do not overlap; and if the time domain resource corresponding to the paging frame and the time domain resource corresponding to the discovery frame overlap, sets the time domain resource corresponding to the paging frame and the time domain resource corresponding to the discovery frame to be non-overlapping; and a sending module delivers reception information corresponding to the discovery frame to user equipment UE, or delivers reception information corresponding to the paging frame to the UE, where the reception information corresponding to the discovery frame is used to instruct the UE to perform only discovery communication on the time domain resource corresponding to the discovery frame, and the reception information corresponding to the paging frame is used to instruct the UE to perform only paging communication on the time domain resource corresponding to the paging frame. In this way, UE performs either discovery signal communication or paging signal communication, so that a collision between two communication manners of the UE is avoided, and stability of D2D communication and cellular communication of the UE is improved.

Optionally, the processing module 301 is specifically configured to: if the time domain resource corresponding to the paging frame and the time domain resource corresponding to the discovery frame overlap, determine that the time domain resource corresponding to the discovery frame is used only for performing discovery communication.

Corresponding to solutions of the base station shown in FIG. 3, the following describes solutions of UE by using a specific embodiment.

FIG. 4 is a schematic structural diagram of another user equipment according to an embodiment of the present invention. The user equipment can also perform functions and corresponding technical effects of the foregoing apparatus shown in FIG. 2. Referring to FIG. 4, the user equipment includes: a receiving module 400 and a communications module 401.

The receiving module 400 is configured to: receive reception information that is corresponding to the discovery frame and is delivered by the base station, where the reception information corresponding to the discovery frame is used to instruct the UE to perform only discovery communication on a time domain resource corresponding to the discovery frame; or receive reception information that is corresponding to a paging frame and is delivered by the base station, where the reception information corresponding to the paging frame is used to instruct the UE to perform only paging communication on a time domain resource corresponding to the paging frame.

The communications module 401 is configured to: perform discovery communication on the time domain resource corresponding to the discovery frame, or perform paging communication on the time domain resource corresponding to the paging frame.

The time domain resource corresponding to the paging frame and the time domain resource corresponding to the discovery frame do not overlap.

It should be noted that the communications module 401 may specifically include an interface used for communication. There may be multiple interfaces, and the interface may be used to receive data or may be used to send data. The receiving module 400 may also be used as an interface to be integrated with the communications module 401. In addition, the communications module 401 may further include a processor having a computation function and a memory having a storage function.

According to the user equipment provided in this embodiment of the present invention, a receiving module is configured to: receive reception information that is corresponding to the discovery frame and is delivered by the base station, where the reception information corresponding to the discovery frame is used to instruct the UE to perform only discovery communication on a time domain resource corresponding to the discovery frame; or receive reception information that is corresponding to a paging frame and is delivered by the base station, where the reception information corresponding to the paging frame is used to instruct the UE to perform only paging communication on a time domain resource corresponding to the paging frame; and a communications module is configured to: perform discovery communication on the time domain resource corresponding to the discovery frame, or perform paging communication on the time domain resource corresponding to the paging frame, where the time domain resource corresponding to the paging frame and the time domain resource corresponding to the discovery frame do not overlap. In this way, UE performs either discovery signal communication or paging signal communication, so that a collision between two communication manners of the UE is avoided, and stability of D2D communication and cellular communication of the UE is improved.

Optionally, the communications module 401 is specifically configured to: receive, on the time domain resource corresponding to the discovery frame, a discovery signal sent by another UE, or send a discovery signal to the another UE on the time domain resource corresponding to the discovery frame; or

the communications module 401 is specifically configured to: receive, on the time domain resource corresponding to the paging frame, a paging signal sent by the base station, or send a paging signal to the base station on the time domain resource corresponding to the paging frame.

FIG. 5 is a schematic structural diagram of another base station according to an embodiment of the present invention. The base station may be an eNB, a small cell, a relay device, or the like, and the apparatus can implement same functions and technical effects as those of the apparatus shown in FIG. 1. Referring to FIG. 5, the apparatus includes: a receiver 500, a processor 501, and a transmitter 502.

The receiver 500 is configured to receive a communications mode request indication sent by user equipment UE.

The communications mode request indication is used to indicate a communications mode that the UE needs to use, and the communications mode includes device-to-device D2D communication or cellular communication.

The processor 501 is configured to determine, according to the communications mode request indication, a communications mode used by the UE.

The transmitter 502 is configured to send, to the UE, information about the determined communications mode used by the UE.

According to the base station provided in this embodiment of the present invention, a receiver receives a communications mode request indication sent by user equipment UE, where the communications mode request indication is used to indicate a communications mode that the UE needs to use, and the communications mode includes device-to-device D2D communication or cellular communication; a processor determines, according to the communications mode request indication, a communications mode used by the UE; and a transmitter sends, to the UE, information about the determined communications mode used by the UE. In this way, UE is instructed, according to a communications mode request indication reported by the UE, to perform either discovery signal communication or cellular signal communication, so that a collision between two communication manners of the UE is avoided, and stability of D2D communication and cellular communication of the UE is improved.

Preferably, the processor 501 is further configured to: if an attribute of a service currently performed by the UE meets a first switching condition, determine that the UE can switch to the communications mode indicated by the communications mode request indication; or

the processor 501 is further configured to: if an attribute of a service currently performed by the UE and the preset service priority meet a second switching condition, determine that the UE can switch to the communications mode indicated by the communications mode request indication.

Further, the receiver 500 is specifically configured to receive an RRC connection setup complete message sent by the UE, where the RRC connection setup complete message includes a discovery signal reception indication, and the discovery signal reception indication is used to indicate that the UE is performing D2D communication.

The processor 501 is specifically configured to determine, according to the discovery signal reception indication, that the communications mode used by the UE is cellular communication.

Optionally, to avoid a collision between a downlink signal in D2D communication and a downlink signal in cellular communication,

the processor 501 is further configured to: if the downlink signal in D2D communication and the downlink signal in cellular communication overlap at a time domain location of a resource, displace a subframe corresponding to the downlink signal in cellular communication, so that the downlink signal in D2D communication and the downlink signal in cellular communication are set at different time domain locations of the resource; and

the transmitter 502 is further configured to send a downlink signal subframe displacement indication to the UE, where the downlink signal subframe displacement indication is used to notify the UE that the subframe corresponding to the downlink signal in cellular communication has been displaced, so that the UE receives, at the different time domain locations of the resource, the downlink signal in D2D communication and/or the downlink signal in cellular communication according to the downlink signal subframe displacement indication.

To avoid a collision between an uplink signal in D2D communication and an uplink signal in cellular communication,

the receiver 500 is further configured to receive an uplink signal subframe displacement indication sent by the UE, where the uplink signal subframe displacement indication is used to indicate that when the uplink signal in D2D communication and the uplink signal in cellular communication overlap at a time domain location of a resource, the UE has displaced a subframe corresponding to the uplink signal in cellular communication, so that the uplink signal in D2D communication and the uplink signal in cellular communication are set at different time domain locations of the resource; and

the receiver 500 is further configured to receive, at the different time domain locations of the resource, the uplink signal in D2D communication and/or the uplink signal in cellular communication according to the uplink signal subframe displacement indication.

The resource is a semi-persistent scheduling resource.

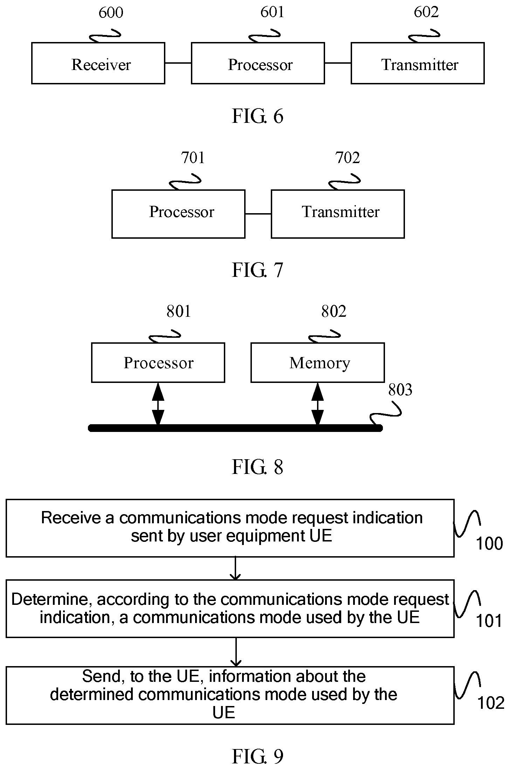

FIG. 6 is a schematic structural diagram of another user equipment according to an embodiment of the present invention. The user equipment can implement same functions and technical effects as those of the apparatus shown in FIG. 2. Referring to FIG. 6, the user equipment includes: a receiver 600, a processor 601, and a transmitter 602.

The transmitter 602 is configured to send a communications mode request indication to a base station.

The communications mode request indication is used to indicate a communications mode that the UE needs to use, and the communications mode includes device-to-device D2D communication or cellular communication.

The receiver 600 is configured to receive information that is sent by the base station and is about a determined communications mode used by the UE, where the information is determined by the base station according to the communications mode request indication, and the information is corresponding to the communications mode that is used by the UE and that is determined by the base station.

The processor 601 is configured to perform communication by using the communications mode corresponding to the information.

According to the user equipment provided in this embodiment of the present invention, a transmitter sends a communications mode request indication to a base station, where the communications mode request indication is used to indicate a communications mode that the UE needs to use, and the communications mode includes device-to-device D2D communication or cellular communication; a receiver receives information that is sent by the base station and is about a determined communications mode used by the UE, where the information is determined by the base station according to the communications mode request indication, and the information is corresponding to the communications mode that is used by the UE and that is determined by the base station; and a processor performs communication by using the communications mode corresponding to the information. In this way, UE performs either discovery signal communication or cellular signal communication, so that a collision between two communication manners of the UE is avoided, and stability of D2D communication and cellular communication of the UE is improved.

Preferably, the processor 601 is further configured to update communication status information, where the communication status information is used to indicate a communications mode that the UE needs to use.

Preferably, when D2D communication is being performed and a radio resource control RRC connection needs to be set up, the transmitter 602 is further configured to send an RRC connection setup complete message to the base station, where the RRC connection setup complete message includes a discovery signal reception indication, and the discovery signal reception indication is used to indicate that the UE is performing D2D communication.

The receiver 600 is specifically configured to receive the information that is sent by the base station and is about the determined communications mode used by the UE, where the information is corresponding to cellular communication.

Optionally, to avoid a collision between a downlink signal in D2D communication and a downlink signal in cellular communication,

the receiver 600 is further configured to receive a downlink signal subframe displacement indication sent by the base station, where the downlink signal subframe displacement indication is used to indicate that when the downlink signal in D2D communication and the downlink signal in cellular communication overlap at a time domain location of a resource, the base station has displaced a subframe corresponding to the downlink signal in cellular communication, so that the downlink signal in D2D communication and the downlink signal in cellular communication are set at different time domain locations of the resource; and

the receiver 600 is further configured to receive, at the different time domain locations of the resource, the downlink signal in D2D communication and/or the downlink signal in cellular communication according to the downlink signal subframe displacement indication.

To avoid a collision between an uplink signal in D2D communication and an uplink signal in cellular communication,

the processor 601 is further configured to: if the uplink signal in D2D communication and the uplink signal in cellular communication overlap at a time domain location of a resource, displace a subframe corresponding to the uplink signal in cellular communication, so that the uplink signal in D2D communication and the uplink signal in cellular communication are set at different time domain locations of the resource; and

the transmitter 602 is further configured to send an uplink signal subframe displacement indication to the base station, where the uplink signal subframe displacement indication is used to indicate that the subframe corresponding to the uplink signal in cellular communication has been displaced.

The resource is a semi-persistent scheduling resource.

Further, when UE having a D2D communication function is receiving a discovery signal, the UE needs to receive a paging channel of a network to determine whether the UE is paged. To avoid a collision between a paging signal in cellular communication and a discovery signal in D2D communication, the following embodiment of the present invention provides a coexistence apparatus for a discovery signal and a cellular signal. FIG. 7 is a schematic structural diagram of another base station according to an embodiment of the present invention. The base station can also perform functions and corresponding technical effects of the foregoing apparatus shown in FIG. 1 or FIG. 3. Referring to FIG. 7, the apparatus includes: a processor 701 and a transmitter 702.

The processor 701 is configured to: determine that a time domain resource corresponding to a paging frame and a time domain resource corresponding to a discovery frame do not overlap; and if the time domain resource corresponding to the paging frame and the time domain resource corresponding to the discovery frame overlap, set the time domain resource corresponding to the paging frame and the time domain resource corresponding to the discovery frame to be non-overlapping.

The transmitter 702 is configured to: deliver reception information corresponding to the discovery frame to user equipment UE, or deliver reception information corresponding to the paging frame to the UE, where the reception information corresponding to the discovery frame is used to instruct the UE to perform only discovery communication on the time domain resource corresponding to the discovery frame, and the reception information corresponding to the paging frame is used to instruct the UE to perform only paging communication on the time domain resource corresponding to the paging frame.

According to the base station provided in this embodiment of the present invention, a processor determines that a time domain resource corresponding to a paging frame and a time domain resource corresponding to a discovery frame do not overlap; and if the time domain resource corresponding to the paging frame and the time domain resource corresponding to the discovery frame overlap, sets the time domain resource corresponding to the paging frame and the time domain resource corresponding to the discovery frame to be non-overlapping; and a transmitter delivers reception information corresponding to the discovery frame to user equipment UE, or delivers reception information corresponding to the paging frame to the UE, where the reception information corresponding to the discovery frame is used to instruct the UE to perform only discovery communication on the time domain resource corresponding to the discovery frame, and the reception information corresponding to the paging frame is used to instruct the UE to perform only paging communication on the time domain resource corresponding to the paging frame. In this way, UE performs either discovery signal communication or paging signal communication, so that a collision between two communication manners of the UE is avoided, and stability of D2D communication and cellular communication of the UE is improved.

Optionally, the processor 701 is specifically configured to: if the time domain resource corresponding to the paging frame and the time domain resource corresponding to the discovery frame overlap, determine that the time domain resource corresponding to the discovery frame is used only for performing discovery communication.

Corresponding to solutions of the base station shown in FIG. 7, the following describes solutions of UE by using a specific embodiment.

FIG. 8 is a schematic structural diagram of another user equipment according to an embodiment of the present invention. The user equipment can also perform functions and corresponding technical effects of the foregoing apparatus shown in FIG. 2 or FIG. 6. Referring to FIG. 8, the apparatus includes: a processor 801, a memory 802, and a system bus 803.

The processor 801 and the memory 802 are connected and implement mutual communication by using the system bus 803.

The memory 802 is configured to store a computer execution instruction.

The processor 801 is configured to run the computer execution instruction, so that the communications mode determining apparatus receives reception information that is corresponding to the discovery frame and is delivered by the base station, where the reception information corresponding to the discovery frame is used to instruct the UE to perform only discovery communication on a time domain resource corresponding to the discovery frame; or receives reception information that is corresponding to a paging frame and is delivered by the base station, where the reception information corresponding to the paging frame is used to instruct the UE to perform only paging communication on a time domain resource corresponding to the paging frame.

The processor 801 is further configured to: perform discovery communication on the time domain resource corresponding to the discovery frame, or perform paging communication on the time domain resource corresponding to the paging frame.

The time domain resource corresponding to the paging frame and the time domain resource corresponding to the discovery frame do not overlap.

According to the user equipment provided in this embodiment of the present invention, a processor receives reception information that is corresponding to the discovery frame and is delivered by the base station, where the reception information corresponding to the discovery frame is used to instruct the UE to perform only discovery communication on a time domain resource corresponding to the discovery frame; or receives reception information that is corresponding to a paging frame and is delivered by the base station, where the reception information corresponding to the paging frame is used to instruct the UE to perform only paging communication on a time domain resource corresponding to the paging frame; and performs discovery communication on the time domain resource corresponding to the discovery frame, or performs paging communication on the time domain resource corresponding to the paging frame, where the time domain resource corresponding to the paging frame and the time domain resource corresponding to the discovery frame do not overlap. In this way, UE performs either discovery signal communication or cellular signal communication, so that a collision between two communication manners of the UE is avoided, and stability of D2D communication and cellular communication of the UE is improved.

Preferably, the processor 801 is specifically configured to: receive, on the time domain resource corresponding to the discovery frame, a discovery signal sent by another UE, or send a discovery signal to the another UE on the time domain resource corresponding to the discovery frame; or

is specifically configured to: receive, on the time domain resource corresponding to the paging frame, a paging signal sent by the base station, or send a paging signal to the base station on the time domain resource corresponding to the paging frame.

Further, an embodiment of the present invention further provides a coexistence system for a discovery signal and a cellular signal. The system includes at least one base station and at least one UE that are shown in the foregoing embodiments. The base station may use a structure of the foregoing apparatus shown in FIG. 1, FIG. 3, FIG. 5, and/or FIG. 7, so as to implement corresponding technical effects. The UE may use a structure of the foregoing apparatus shown in FIG. 2, FIG. 4, FIG. 6, and/or FIG. 8, so as to implement corresponding technical effects. In addition, the system may include another network element in a data transmission process, for example, a gateway or a server.

By using specific embodiments, the following provides a coexistence method for a discovery signal and a cellular signal, so as to avoid a collision between a sending signal and a cellular signal, and avoid reduced communication stability caused by the collision. FIG. 9 is a schematic flowchart of a coexistence method for a discovery signal and a cellular signal according to an embodiment of the present invention. An entity for executing the method may use a structure of the apparatus shown in FIG. 1, FIG. 3, FIG. 5, and/or FIG. 7, so as to implement corresponding technical effects. Specifically, the apparatus is an eNB, a base station, a small cell, a relay device, or the like. Unless otherwise described, an eNB is used as an example in the following embodiment for description. Referring to FIG. 9, the method includes the following steps.

Step 100: Receive a communications mode request indication sent by user equipment UE.

The communications mode request indication is used to indicate a communications mode that the UE needs to use, and the communications mode includes device-to-device D2D communication or cellular communication.

Step 101: Determine, according to the communications mode request indication, a communications mode used by the UE.

Step 102: Send, to the UE, information about the determined communications mode used by the UE.

According to the communications mode determining method provided in this embodiment of the present invention, a communications mode request indication sent by user equipment UE is received, where the communications mode request indication is used to indicate a communications mode that the UE needs to use, and the communications mode includes device-to-device D2D communication or cellular communication; a communications mode used by the UE is determined according to the communications mode request indication; and information about the determined communications mode used by the UE is sent to the UE. In this way, UE is instructed, according to a communications mode request indication reported by the UE, to perform either discovery signal communication or cellular signal communication, so that a collision between two communication manners of the UE is avoided, and stability of D2D communication and cellular communication of the UE is improved.

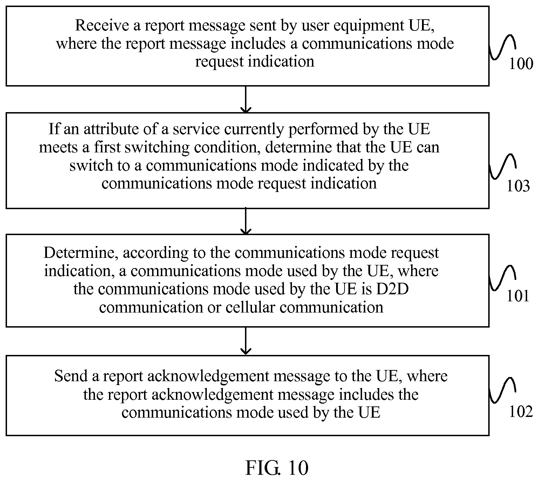

On a basis of FIG. 9, FIG. 10 is a schematic flowchart of another coexistence method for a discovery signal and a cellular signal according to an embodiment of the present invention. Referring to FIG. 10, before step 101, the method further includes the following step:

Step 103: If an attribute of a service currently performed by the UE meets a first switching condition, determine that the UE can switch to the communications mode indicated by the communications mode request indication.

Specifically, if the attribute of the service currently performed by the UE does not meet the first switching condition, it indicates that the UE cannot switch to the communications mode corresponding to the communications mode request indication.

Further, the first switching condition may have multiple implementation forms. For example, the UE is performing a Voice over Internet Protocol (VoIP) service now. Because voice has a high delay requirement, the eNB determines not to allow the UE to receive a discovery signal in D2D communication, and then instructs the UE to delay discovery signal reception. An instruction method is as follows: Acknowledgement RRC signaling is "delay discovery signal reception (delay discovery reception)". For another example, a download service is being performed, and has a low delay requirement. The eNB considers that the UE may be allowed to receive a discovery signal, and then instructs the UE to receive the discovery signal within a cycle corresponding to a next adjacent discovery signal. An instruction method is as follows: Acknowledgement RRC signaling is "discovery signal reception right now (discovery reception right now)".

Apparently, the first switching condition may have another implementation form, provided that D2D communication or cellular communication can be properly performed after the switching. A specific form of the first switching condition is not limited in this embodiment.

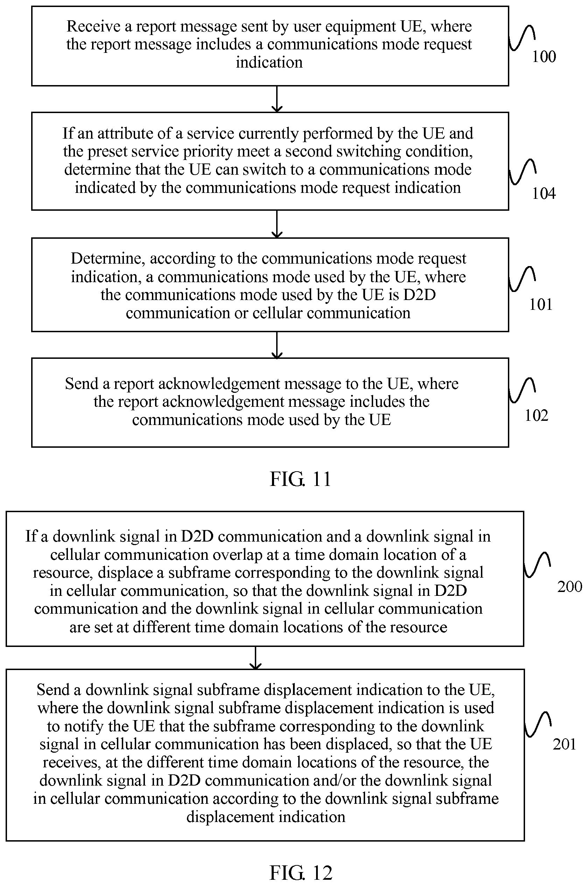

On a basis of FIG. 9, FIG. 11 is a schematic flowchart of another coexistence method for a discovery signal and a cellular signal according to an embodiment of the present invention. Referring to FIG. 11, before step 101, the method further includes the following step:

Step 104: If an attribute of a service currently performed by the UE and the preset service priority meet a second switching condition, determine that the UE can switch to the communications mode indicated by the communications mode request indication.

Specifically, if the attribute of the service currently performed by the UE and the preset service priority do not meet the second switching condition, it indicates that the UE cannot switch to the communications mode corresponding to the communications mode request indication.

Further, the second switching condition may have multiple implementation forms, such as UE subscription information. If a discovery signal is set as a service having a lowest priority, the eNB sends an indication to request the UE to perform discovery signal communication only within a discontinuous reception (Discontinue Receiveing, DRX for short) inactive period (deactive period), or to perform discovery signal communication when another service does not exist. If a discovery signal is set as a non-lowest priority, a priority of the discovery signal is compared with a priority of another service being performed, and reception of the UE is scheduled in descending order of priorities. When the priority of the discovery signal is higher, the UE is required to perform discovery signal communication, that is, after a cycle of the discovery signal arrives, the eNB does not schedule other service data. Otherwise, the UE is instructed not to perform discovery signal communication.

Optionally, when UE having a D2D communication function is receiving a D2D discovery (discovery) signal, if the UE needs to set up an RRC link to perform communication of another service, for such a scenario, the following uses specific examples for description.

When a time domain of an RRC setup process and a discovery signal reception cycle in a cell on which the UE camps are the same or overlap, the UE is required to temporarily abandon discovery signal reception, and receives only a cellular downlink signal sent by the base station. A message in the last step of the RRC link setup process is an "RRC connection setup complete (RRC connection setup complete) message", and the message is reported to the eNB to indicate that the UE is receiving a discovery signal. The foregoing report message is the "RRC connection setup complete message". Further, an indicator field "discovery signal receiving (discovery receiving)" is added to the message. For example, if the indicator field is "1", it indicates that a discovery signal is being received; if the indicator field is "0", it indicates that no discovery signal is being received.

The eNB parses the received message, finds that the UE is receiving a discovery signal, and when the UE is incapable of simultaneously receiving a cellular signal sent by the downlink base station and a discovery signal sent by another D2D UE, performs step 101 and step 102 in the foregoing embodiment.

Further, a feasible implementation manner of step 100 is as follows:

Step 100a: Receive an RRC connection setup complete message sent by the UE, where the RRC connection setup complete message includes a discovery signal reception indication, and the discovery signal reception indication is used to indicate that the UE is performing D2D communication.

Correspondingly, a feasible implementation manner of step 101 is as follows:

Step 101a: Determine, according to the discovery signal reception indication, that the communications mode used by the UE is cellular communication.

Optionally, when the UE having the D2D communication function is receiving a discovery signal, the eNB configures a semi-persistent scheduling resource (Semi-static Persistent Scheduling Resource, SPS for short) for the UE, so that the UE can delay cellular signal reception, and a collision between a discovery signal and a cellular signal is avoided. Further, FIG. 12 is a schematic flowchart of another communications mode determining method according to an embodiment of the present invention. An entity for executing the method may use a structure of the apparatus shown in FIG. 1, FIG. 3, FIG. 5, and/or FIG. 7, so as to implement corresponding technical effects. The method may be implemented together with embodiments corresponding to FIG. 9 to FIG. 11, or may be implemented independently. This is not limited herein. Specifically, referring to FIG. 12, to avoid a collision between a downlink signal in D2D communication and a downlink signal in cellular communication, the method includes the following steps:

Step 200: If a downlink signal in D2D communication and a downlink signal in cellular communication overlap at a time domain location of a resource, displace a subframe corresponding to the downlink signal in cellular communication, so that the downlink signal in D2D communication and the downlink signal in cellular communication are set at different time domain locations of the resource.

Step 201: Send a downlink signal subframe displacement indication to the UE, where the downlink signal subframe displacement indication is used to notify the UE that the subframe corresponding to the downlink signal in cellular communication has been displaced, so that the UE receives, at the different time domain locations of the resource, the downlink signal in D2D communication and/or the downlink signal in cellular communication according to the downlink signal subframe displacement indication.

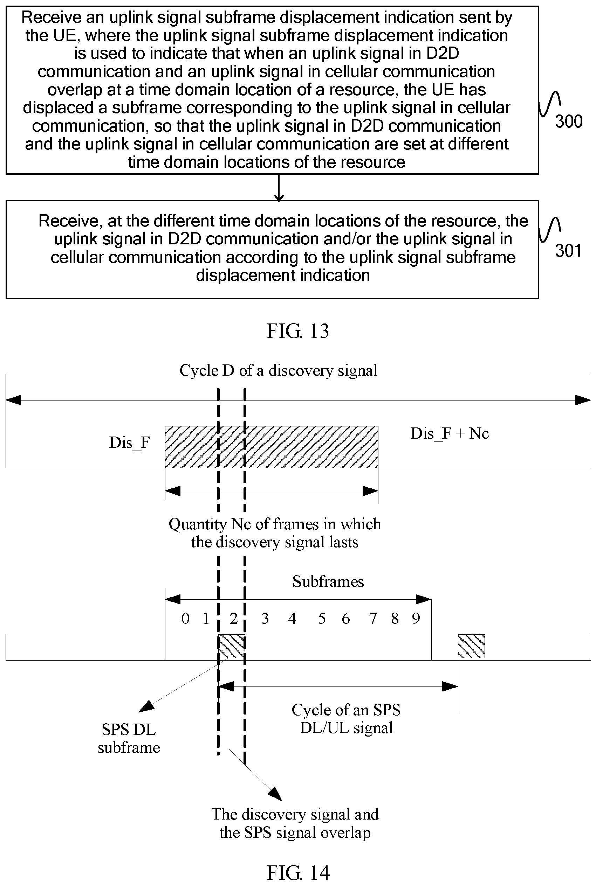

FIG. 13 is a schematic flowchart of another communications mode determining method according to an embodiment of the present invention. An entity for executing the method may use a structure of the apparatus shown in FIG. 1, FIG. 3, FIG. 5, and/or FIG. 7, so as to implement corresponding technical effects. The method may be implemented together with embodiments corresponding to FIG. 9 to FIG. 11, or may be implemented independently. This is not limited herein. Specifically, referring to FIG. 13, to avoid a collision between an uplink signal in D2D communication and an uplink signal in cellular communication, the method includes the following steps:

Step 300: Receive an uplink signal subframe displacement indication sent by the UE, where the uplink signal subframe displacement indication is used to indicate that when an uplink signal in D2D communication and an uplink signal in cellular communication overlap at a time domain location of a resource, the UE has displaced a subframe corresponding to the uplink signal in cellular communication, so that the uplink signal in D2D communication and the uplink signal in cellular communication are set at different time domain locations of the resource.

Step 301: Receive, at the different time domain locations of the resource, the uplink signal in D2D communication and/or the uplink signal in cellular communication according to the uplink signal subframe displacement indication.

Specifically, in the embodiment corresponding to FIG. 12 or FIG. 13, a resource allocated by the eNB to the UE may be periodically used for a time period. The resource is configurable or changeable. That is, the resource is a semi-persistent scheduling resource.

According to the coexistence method for a discovery signal and a cellular signal provided in this embodiment of the present invention, it is determined whether a signal in D2D communication and a signal in cellular communication overlap at a time domain location of a resource; and if the signal in D2D communication and the signal in cellular communication overlap at the time domain location of the resource, a subframe corresponding to the signal in cellular communication is displaced, so that the signal in D2D communication and the signal in cellular communication are set at different time domain locations of the resource. In this way, D2D communication and cellular communication are independent from each other, a mutual collision is avoided, and stability of D2D communication and cellular communication is improved.

Further, for how to displace a subframe corresponding to a signal in cellular communication to enable a signal in D2D communication and the signal in cellular communication to be independent from each other, the following uses several feasible implementation manners as an example for description.

FIG. 14 to FIG. 16 are schematic diagrams of subframe displacement according to an embodiment of the present invention. A downlink signal is used as an example. A discovery signal is used in D2D communication, and an SPS signal is used in cellular communication. Specifically, first, referring to FIG. 14, an upper part in FIG. 14 is a time axis of a discovery signal, and a lower part is a time axis of an SPS signal. It can be learned from FIG. 14 that, the SPS signal and the discovery signal overlap. In this case, a feasible manner is to displace a subframe 2, of the SPS signal, that overlaps the discovery signal, and displace the subframe 2 to a cycle corresponding to a next SPS signal.

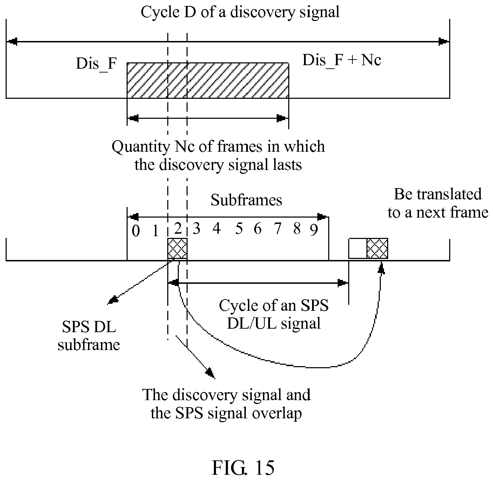

Referring to FIG. 15, an upper part is a time axis of a discovery signal, and a lower part is a time axis of an SPS signal. The SPS signal and the discovery signal overlap. In this case, another feasible manner is to translate an overlapped subframe 2 to a subframe 3 within a cycle corresponding to a next SPS signal, where a subframe 2 within the next cycle is also used for SPS signal transmission. That is, the SPS signal corresponding to the subframe 2 and the SPS signal corresponding to the subframe 3 are transmitted within one cycle.

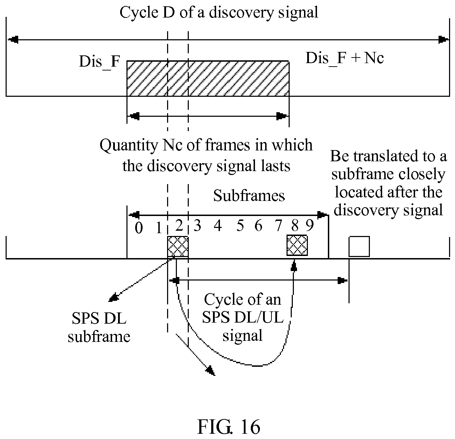

Referring to FIG. 16, an upper part is a time axis of a discovery signal, and a lower part is a time axis of an SPS signal. The SPS signal and the discovery signal overlap. In this case, it can be learned from FIG. 16 that, a cycle corresponding to the SPS signal and a cycle corresponding to the discovery signal do not totally overlap. For example, within the cycle corresponding to the SPS signal in FIG. 16, a subframe 8 and a subframe 9 do not overlap the discovery signal. Therefore, another feasible manner is to translate an overlapped subframe 2 to a non-overlapped subframe within a same cycle, for example, translate to the subframe 8.

A specific implementation manner of subframe displacement shown in FIG. 14 to FIG. 16 is as follows:
It is assumed that D is a length of a cycle in which a discovery signal appears; an initial location of a discovery frame number within each cycle is Dis_F; a number of an initial subframe of the discovery signal is Ndoff; a quantity of subframes in which the discovery signal lasts is Nc; and within a length of a cycle in which a downlink frame of an SPS signal appears, duration occupied by each data packet of the downlink SPS signal is one subframe whose subframe number is Ns (the subframe number ranges from 0 to 9).

When SFNi mod D falls within [Dis_F, (Dis F $\times$ 10 + Ndoff + Nc) / 10], where SFNi is an $i^{th}$ system subframe number, and when SFNi mod D also falls within (SFNi mod (SPS DL frame cycle)) (that is, a frame number of a subframe of a discovery signal is the same as a frame number of an SPS DL subframe), that is, if the subframe of the discovery signal is the same as the SPS DL downlink subframe: Nd = SPS subframe Ns, where Nd is the number of the subframe of the discovery signal,
the eNB displaces Ns to an Ns subframe in an SFNi + (Dis_F $\times$ 10 + Ndoff + Nc) / 10 + 1 frame, and the UE also receives, in the SFNi + (Dis_F $\times$ 10 + Ndoff + Nc) / 10 + 1, a signal sent by the downlink base station.

Further, a possible displacement method is to change an SPS DL subframe to a subframe located after the last subframe of subframes of the discovery signal, that is, a frame number is SFNi + (Dis_F $\times$ 10 + Ndoff + Nc) / 10, and a subframe number is (Ndoff + Nc + 1) mod 10.

Corresponding to the foregoing embodiment of the eNB, the following describes solutions on a UE side by using specific embodiments.

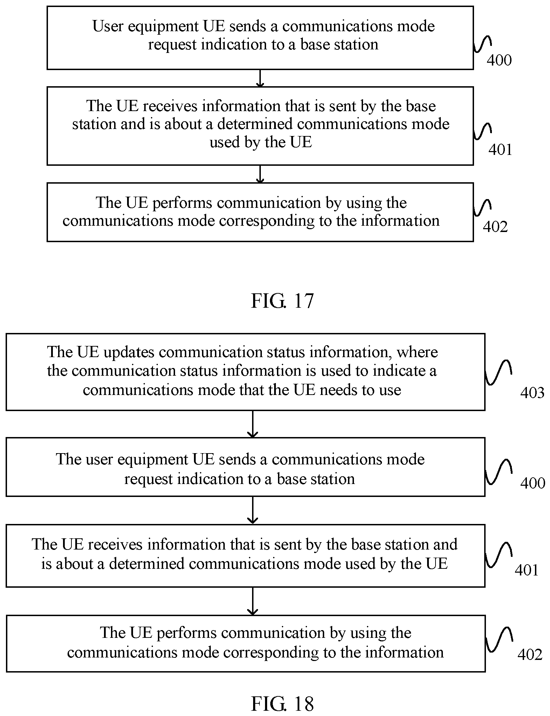

FIG. 17 is a schematic flowchart of another coexistence method for a discovery signal and a cellular signal according to this embodiment of the present invention. The method is executed by UE having a D2D communication function. The UE may use a structure of the foregoing apparatus shown in FIG. 2, FIG. 4, FIG. 6, and/or FIG. 8, so as to implement corresponding technical effects. Specifically, the UE may be a mobile phone, a terminal device having a cellular device-to-device function, or the like. Referring to FIG. 17, the method includes the following steps.

Step 400: The user equipment UE sends a communications mode request indication to a base station.

The communications mode request indication is used to indicate a communications mode that the UE needs to use, and the communications mode includes device-to-device D2D communication or cellular communication.

Step 401: The UE receives information that is sent by the base station and is about a determined communications mode used by the UE.

Specifically, the information is determined by the base station according to the communications mode request indication, and the information is corresponding to the communications mode that is used by the UE and that is determined by the base station.

Step 402: The UE performs communication by using the communications mode corresponding to the information.

According to the coexistence method for a discovery signal and a cellular signal provided in this embodiment of the present invention, user equipment UE sends a communications mode request indication to a base station, where the communications mode request indication is used to indicate a communications mode that the UE needs to use, and the communications mode includes device-to-device D2D communication or cellular communication; the UE receives information that is sent by the base station and is about a determined communications mode used by the UE, where the information is determined by the base station according to the communications mode request indication, and the information is corresponding to the communications mode that is used by the UE and that is determined by the base station; and the UE performs communication by using the communications mode corresponding to the information. In this way, UE performs either discovery signal communication or cellular signal communication, so that a collision between two communication manners of the UE is avoided, and stability of D2D communication and cellular communication of the UE is improved.

On a basis of FIG. 17, FIG. 18 is a schematic flowchart of another coexistence method for a discovery signal and a cellular signal according to an embodiment of the present invention. Before step 400, the method further includes the following step:

Step 403: The UE updates communication status information, where the communication status information is used to indicate a communications mode that the UE needs to use.

Specifically, a feasible implementation manner of step 403 is as follows: At a RAN layer (which is specifically an RRC layer), the UE receives, from a proximity service layer (Prose layer), indication information indicating that discovery signal reception starts; and updates the communication status information, that is, communication status information required by the UE is D2D communication. Alternatively, another feasible implementation manner is as follows: The UE notifies, at an RRC layer, that discovery signal reception is required at a MAC layer, and sends a report to the eNB at the MAC layer by using a Media Access Control control element (MAC CE for short), and content of the MAC CE is shown in the following Table 1:

**Table 1**

| LGID | Discovery Receiving Status |
|------|----------------------------|

A logical group identifier (Logical Group ID, LGID for short) indicates that the MAC CE is used to report a discovery signal receiving status. "Discovery signal receiving status (discovery receiving status)" is "discovery signal reception start (discovery reception start)" or "discovery signal reception stop (discovery reception stop)". Correspondingly, in the foregoing step 301, the eNB sends a physical downlink control channel (Physical Downlink Control Channel, PDCCH for short), so as to instruct the UE to receive a discovery signal subsequently or continue to receive a cellular downlink signal. That the eNB sends a physical downlink control channel is specifically as follows: An indication is carried in the PDCCH, and an indication bit is "allow to receive" or "delay reception".

A feasible implementation manner of step 400 is as follows:

Step 400a: The UE sends an RRC connection setup complete message to the base station, where the RRC connection setup complete message includes a discovery signal reception indication, and the discovery signal reception indication is used to indicate that the UE is performing D2D communication.

Based on step 400a, a feasible implementation manner of step 401 is as follows:

Step 401a: The UE receives the information that is sent by the base station and is about the determined communications mode used by the UE, where the information is corresponding to cellular communication.

For example, when the UE finds, at the RRC layer, that the UE is in an "RRC_connected (RRC_connected)" mode, the UE reports "discovery signal reception start (discovery reception start)" to the eNB, to indicate that the UE wants to receive a discovery signal subsequently.

Optionally, corresponding to that the eNB configures a semi-persistent scheduling resource for the UE in the foregoing embodiment, correspondingly, to avoid a collision between a downlink signal in D2D communication and a downlink signal in cellular communication, the UE receives a downlink signal subframe displacement indication sent by the base station, where the downlink signal subframe displacement indication is used to indicate that when the downlink signal in D2D communication and the downlink signal in cellular communication overlap at a time domain location of a resource, the base station has displaced a subframe corresponding to the downlink signal in cellular communication, so that the downlink signal in D2D communication and the downlink signal in cellular communication are set at different time domain locations of the resource. The UE receives, at the different time domain locations of the resource, the downlink signal in D2D communication and/or the downlink signal in cellular communication according to the downlink signal subframe displacement indication.

To avoid a collision between an uplink signal in D2D communication and an uplink signal in cellular communication, if the uplink signal in D2D communication and the uplink signal in cellular communication overlap at a time domain location of a resource, the UE displaces a subframe corresponding to the uplink signal in cellular communication, so that the uplink signal in D2D communication and the uplink signal in cellular communication are set at different time domain locations of the resource. The UE sends an uplink signal subframe displacement indication to the base station, where the uplink signal subframe displacement indication is used to indicate that the subframe corresponding to the uplink signal in cellular communication has been displaced.

The resource is a semi-persistent scheduling resource.

It should be noted that, after the UE receives the semi-persistent scheduling resource configured by the base station, how to displace an overlapped subframe on a base station side has been described in detail in the foregoing embodiment, and details are not described herein again.

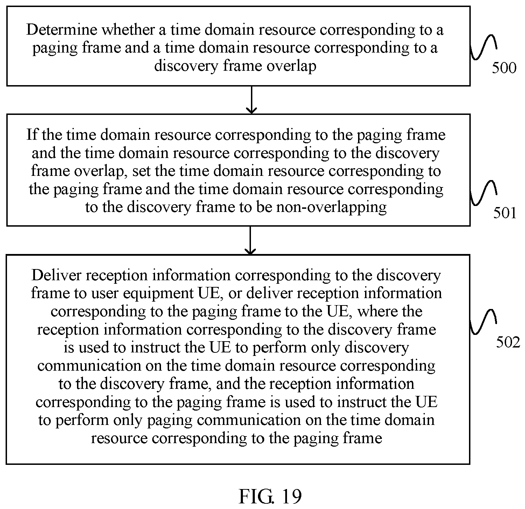

Further, when UE having a D2D communication function is receiving a discovery signal, the UE needs to receive a paging channel of a network to determine whether the UE is paged. To avoid a collision between a paging signal in cellular communication and a discovery signal in D2D communication, the following embodiment of the present invention provides a coexistence method for a discovery signal and a cellular signal. FIG. 19 is a schematic flowchart of another coexistence method for a discovery signal and a cellular signal according to an embodiment of the present invention. The method may be executed by an eNB, and the eNB can also perform functions in the foregoing embodiments corresponding to FIG. 9 to FIG. 11. Referring to FIG. 19, the method includes the following steps:

Step 500: Determine whether a time domain resource corresponding to a paging frame and a time domain resource corresponding to a discovery frame overlap.

Step 501: If the time domain resource corresponding to the paging frame and the time domain resource corresponding to the discovery frame overlap, set the time domain resource corresponding to the paging frame and the time domain resource corresponding to the discovery frame to be non-overlapping.

Step 502: Deliver reception information corresponding to the discovery frame to user equipment UE, or deliver reception information corresponding to the paging frame to the UE, where the reception information corresponding to the discovery frame is used to instruct the UE to perform only discovery communication on the time domain resource corresponding to the discovery frame, and the reception information corresponding to the paging frame is used to instruct the UE to perform only paging communication on the time domain resource corresponding to the paging frame.

According to the coexistence method for a discovery signal and a cellular signal provided in this embodiment of the present invention, it is determined whether a time domain resource corresponding to a paging frame and a time domain resource corresponding to a discovery frame overlap; if the time domain resource corresponding to the paging frame and the time domain resource corresponding to the discovery frame overlap, the time domain resource corresponding to the paging frame and the time domain resource corresponding to the discovery frame is set to be non-overlapping; and reception information corresponding to the discovery frame is delivered to user equipment UE, or reception information corresponding to the paging frame is delivered to the UE, where the reception information corresponding to the discovery frame is used to instruct the UE to perform only discovery communication on the time domain resource corresponding to the discovery frame, and the reception information corresponding to the paging frame is used to instruct the UE to perform only paging communication on the time domain resource corresponding to the paging frame. In this way, UE performs either discovery signal communication or paging signal communication, so that a collision between two communication manners of the UE is avoided, and stability of D2D communication and cellular communication of the UE is improved.

Preferably, a feasible implementation manner of step 500 is as follows:

Step 500a: If the time domain resource corresponding to the paging frame and the time domain resource corresponding to the discovery frame overlap, determine that the time domain resource corresponding to the discovery frame is used only for performing discovery communication.

Specifically, the paging channel that the UE needs to receive is a paging frame (Paging Frame, PF for short) in terms of a time domain, and the paging frame is obtained by calculation by using the following formula:

$$ \text{SFN mod } T = (T \text{ div } N) \times (UE\_ID \text{ mod } N), $$

where

T is a discontinuous reception cycle length, nB is 4T, 2T, T, T/2, T/4, T/8, T/16, or T/32, N is min (T, nB), a subframe number calculation parameter Ns is max (1, nB/T), and UE_ID is IMSI mod 1024.

Further, a correspondence between Ns, a paging occasion (Paging Occasion, PO for short) subframe, and a paging subframe number (i s) is shown in the following Table 2 and Table 3:

Table 2

| Ns | PO when i_s = 0 | PO when i_s = 1 | PO when i_s = 2 | PO when i_s = 3 |
|---|---|---|---|---|
| 1 | 9 | N/A | N/A | N/A |
| 2 | 4 | 9 | N/A | N/A |

(continued)

| Ns | PO when i_s = 0 | PO when i_s = 1 | PO when i_s = 2 | PO when i_s = 3 |
|---|---|---|---|---|
| 4 | 0 | 4 | 5 | 9 |

**Table 3**

| Ns | PO when i_s = 0 | PO when i_s = 1 | PO when i_s =2 | PO when i_s = 3 |
|---|---|---|---|---|
| 1 | 0 | N/A | N/A | N/A |
| 2 | 0 | 5 | N/A | N/A |
| 4 | 0 | 1 | 5 | 6 |

All parameters shown in Table 2 are applicable to a frequency division duplex (Frequency Division Duplexing, FDD for short) system, and all parameters shown in Table 3 are applicable to a time division duplex (Time Division Duplexing, TDD for short) system.

Further, i s may be obtained by using the following formula:

$$i\_s = floor\,(UE\_ID\,/\,N)\bmod Ns.$$

To ensure that the UE can receive a paging signal and a discovery signal, the foregoing method is used, so that a paging frame of the paging signal and a discovery frame of the discovery signal do not overlap each other, and a collision is avoided. Specifically, an implementation manner may be as follows:

Manner 1: The eNB specifies that when the paging frame and the discovery frame overlap, that is, SFN mode D = (T div N) $\times$ (UE_ID mod N), where D is a cycle of a discovery signal, the discovery frame cannot be used as the paging frame to send a paging signal. In this case, the UE does not need to receive a paging message either.
Manner 2: When the paging frame and the discovery frame overlap, the eNB updates a location of the paging frame, so that the location of the paging frame and a location of the discovery frame are independent from each other, and a collision is avoided.

Corresponding to solutions on an eNB side that are shown in FIG. 19, the following describes solutions on a UE side by using a specific embodiment.

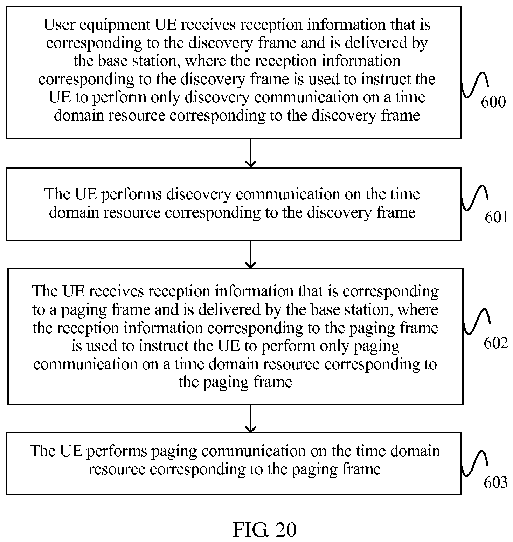

FIG. 20 is a schematic flowchart of another coexistence method for a discovery signal and a cellular signal according to an embodiment of the present invention. The method may be executed by UE, and the UE can also perform functions in the foregoing embodiments corresponding to FIG. 17 and FIG. 18. Referring to FIG. 20, the method includes the following steps:

Step 600: The user equipment UE receives reception information that is corresponding to the discovery frame and is delivered by the base station, where the reception information corresponding to the discovery frame is used to instruct the UE to perform only discovery communication on a time domain resource corresponding to the discovery frame.
Step 601: The UE performs discovery communication on the time domain resource corresponding to the discovery frame.
Step 602: The UE receives reception information that is corresponding to a paging frame and is delivered by the base station, where the reception information corresponding to the paging frame is used to instruct the UE to perform only paging communication on a time domain resource corresponding to the paging frame.
Step 603: The UE performs paging communication on the time domain resource corresponding to the paging frame.

It should be noted that the time domain resource corresponding to the paging frame and the time domain resource corresponding to the discovery frame do not overlap. In addition, when step 600 and step 601 are being performed, step 602 and step 603 may not be performed, and vice versa.

According to the coexistence method for a discovery signal and a cellular signal provided in this embodiment of the present invention, user equipment UE receives reception information that is corresponding to the discovery frame and is delivered by the base station, where the reception information corresponding to the discovery frame is used to instruct the UE to perform only discovery communication on a time domain resource corresponding to the discovery frame; and the UE performs discovery communication on the time domain resource corresponding to the discovery frame. Alternatively, the UE receives reception information that is corresponding to a paging frame and is delivered by the base station, where the reception information corresponding to the paging frame is used to instruct the UE to perform only paging communication on a time domain resource corresponding to the paging frame; and the UE performs paging communication on the time domain resource corresponding to the paging frame. The time domain resource corresponding to the paging frame and the time domain resource corresponding to the discovery frame do not overlap. In this way, UE performs either discovery signal communication or paging signal communication, so that a collision between two communication manners of the UE is avoided, and stability of D2D communication and cellular communication of the UE is improved.

Further, a feasible implementation manner of step 601 is as follows:

Step 601a: The UE receives, on the time domain resource corresponding to the discovery frame, a discovery signal sent by another UE, or the UE sends a discovery signal to the another UE on the time domain resource corresponding to the discovery frame.

A feasible implementation manner of step 603 is as follows:

Step 603a: The UE receives, on the time domain resource corresponding to the paging frame, a paging signal sent by the base station, or the UE sends a paging signal to the base station on the time domain resource corresponding to the paging frame.

Referring to the foregoing description, the time domain resource corresponding to the paging frame and the time domain resource corresponding to the discovery frame are independent from each other. Therefore, when paging communication is performed on the time domain resource corresponding to the paging frame, there is no collision with the discovery frame. Alternatively, when the UE performs discovery communication on the corresponding time domain resource, it can be learned from the foregoing description that, paging communication is not allowed to perform on the time domain resource corresponding to the discovery frame, so that a collision can also be avoided.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are only intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments without departing from the scope of the technical solutions of the embodiments of the present invention.

**Claims**

1. A base station, comprising:

   a receiving module (100), configured to receive a communications mode request indication sent by user equipment, UE, wherein
   the communications mode request indication is used to indicate a communications mode that the UE needs to use, and the communications mode comprises device-to-device, D2D, communication or cellular communication;
   a processing module (101), configured to determine, according to the communications mode request indication, a communications mode used by the UE;
   a sending module (102), configured to send, to the UE, information about the determined communications mode used by the UE; and **characterized in that**:

   the processing module is further configured to: if a downlink signal in D2D communication and a downlink signal in cellular communication overlap at a time domain location of a resource, displace a subframe corresponding to the downlink signal in cellular communication, so that the downlink signal in D2D communication and the downlink signal in cellular communication are set at different time domain locations of the resource; and
   the sending module is further configured to send a downlink signal subframe displacement indication to the UE, wherein the downlink signal subframe displacement indication is used to notify the UE that the subframe corresponding to the downlink signal in cellular communication has been displaced.

2. The base station according to claim 1, wherein the processing module is further configured to: if an attribute of a service currently performed by the UE meets a first switching condition, determine that the UE can switch to the communications mode indicated by the communications mode request indication; or
the processing module is further configured to: if an attribute of a service currently performed by the UE and a preset service priority meet a second switching condition, determine that the UE can switch to the communications mode indicated by the communications mode request indication.

3. The base station according to claim 1 or 2, wherein the receiving module is configured to receive a radio resource control, RRC, connection setup complete message sent by the UE, wherein the RRC connection setup complete message comprises a discovery signal reception indication, and the discovery signal reception indication is used to indicate that the UE is performing D2D communication; and
the processing module is specifically configured to determine, according to the discovery signal reception indication, that the communications mode used by the UE is cellular communication.

4. The base station according to any one of claims 1 to 3, wherein the receiving module is further configured to receive an uplink signal subframe displacement indication sent by the UE, wherein the uplink signal subframe displacement indication is used to indicate that when an uplink signal in D2D communication and an uplink signal in cellular communication overlap at a time domain location of a resource, the UE has displaced a subframe corresponding to the uplink signal in cellular communication, so that the uplink signal in D2D communication and the uplink signal in cellular communication are set at different time domain locations of the resource; and
the receiving module is further configured to receive, at the different time domain locations of the resource, the uplink signal in D2D communication and/or the uplink signal in cellular communication according to the uplink signal subframe displacement indication.

5. User equipment, UE, comprising:

a sending module (202), configured to send a communications mode request indication to a base station, wherein the communications mode request indication is used to indicate a communications mode that the UE needs to use, and the communications mode comprises device-to-device, D2D, communication or cellular communication;
a receiving module (200), configured to receive information that is sent by the base station and is about a determined communications mode used by the UE, wherein the information is determined by the base station according to the communications mode request indication, and the information is corresponding to the communications mode that is used by the UE and that is determined by the base station;
a processing module (201), configured to perform communication by using the communications mode corresponding to the information; and **characterized in that**:

the processing module is further configured to: if an uplink signal in D2D communication and an uplink signal in cellular communication overlap at a time domain location of a resource, displace a subframe corresponding to the uplink signal in cellular communication, so that the uplink signal in D2D communication and the uplink signal in cellular communication are set at different time domain locations of the resource; and
the sending module is further configured to send an uplink signal subframe displacement indication to the base station, wherein the uplink signal subframe displacement indication is used to indicate that the subframe corresponding to the uplink signal in cellular communication has been displaced.

6. The user equipment according to claim 5, wherein the processing module is further configured to update communication status information, wherein the communication status information is used to indicate a communications mode that the UE needs to use.

7. The user equipment according to claim 5 or 6, wherein the sending module is further configured to send a radio resource control, RRC, connection setup complete message to the base station, wherein the RRC connection setup complete message comprises a discovery signal reception indication, and the discovery signal reception indication is used to indicate that the UE is performing D2D communication; and
the receiving module is specifically configured to receive the information that is sent by the base station and is about the determined communications mode used by the UE, wherein the information is corresponding to cellular communication.

8. The user equipment according to any one of claims 5 to 7, wherein the receiving module is further configured to receive a downlink signal subframe displacement indication sent by the base station, wherein the downlink signal subframe displacement indication is used to indicate that when a downlink signal in D2D communication and a downlink signal in cellular communication overlap at a time domain location of a resource, the base station has displaced a subframe corresponding to the downlink signal in cellular communication, so that the downlink signal in D2D communication and the downlink signal in cellular communication are set at different time domain locations of the resource; and

the receiving module is further configured to receive, at the different time domain locations of the resource, the downlink signal in D2D communication and/or the downlink signal in cellular communication according to the downlink signal subframe displacement indication.

9. A coexistence method for a discovery signal and a cellular signal, comprising:

sending (400), by user equipment, UE, a communications mode request indication to a base station, wherein the communications mode request indication is used to indicate a communications mode that the UE needs to use, and the communications mode comprises device-to-device, D2D, communication or cellular communication;

receiving (401), by the UE, information that is sent by the base station and is about a determined communications mode used by the UE, wherein the information is determined by the base station according to the communications mode request indication, and the information is corresponding to the communications mode that is used by the UE and that is determined by the base station;

performing (402), by the UE, communication by using the communications mode corresponding to the information; and **characterized by**:

receiving a downlink signal subframe displacement indication sent by the base station, wherein the downlink signal subframe displacement indication is used to indicate that when a downlink signal in D2D communication and a downlink signal in cellular communication overlap at a time domain location of a resource, the base station has displaced a subframe corresponding to the downlink signal in cellular communication, so that the downlink signal in D2D communication and the downlink signal in cellular communication are set at different time domain locations of the resource; and

receiving, at different time domain locations of the resource, the downlink signal in D2D communication and/or the downlink signal in cellular communication according to the downlink signal subframe displacement indication.

10. The method according to claim 9, before the sending, by user equipment UE, a communications mode request indication to a base station, further comprising:

updating, by the UE, communication status information, wherein the communication status information is used to indicate a communications mode that the UE needs to use.

11. The method according to claim 9 or 10, wherein the sending, by user equipment UE, a communications mode request indication to a base station comprises:

sending, by the UE, a radio resource control, RRC, connection setup complete message to the base station, wherein the RRC connection setup complete message comprises a discovery signal reception indication, and the discovery signal reception indication is used to indicate that the UE is performing D2D communication; and

the receiving, by the UE, information that is sent by the base station and is about a determined communications mode used by the UE comprises:

receiving, by the UE, the information that is sent by the base station and is about the determined communications mode used by the UE, wherein the information is corresponding to cellular communication.

12. The method according to any one of claims 9 to 11, further comprising:

if an uplink signal in D2D communication and an uplink signal in cellular communication overlap at a time domain location of a resource, displacing a subframe corresponding to the uplink signal in cellular communication, so that the uplink signal in D2D communication and the uplink signal in cellular communication are set at different time domain locations of the resource; and

sending an uplink signal subframe displacement indication to the base station, wherein the uplink signal subframe displacement indication is used to indicate that the subframe corresponding to the uplink signal in cellular communication has been displaced.

**EP 3 185 630 B1**

**Patentansprüche**

1.  Basisstation, umfassend:

    ein Empfangsmodul (100), ausgelegt zum Empfangen einer durch ein Benutzer-Equipment, UE, gesendeten Kommunikationsmodus-Anforderungsangabe, wobei die Kommunikationsmodus-Anforderungsangabe verwendet wird, um einen Kommunikationsmodus anzugeben, den das UE verwenden soll, und der Kommunikationsmodus Gerät-zu-Gerät-, D2D-, -Kommunikation oder zelluläre Kommunikation umfasst;
    ein Verarbeitungsmodul (101), ausgelegt zum Festlegen eines durch das UE verwendeten Kommunikationsmodus entsprechend der Kommunikationsmodus-Anforderungsangabe;
    ein Sendemodul (102), ausgelegt zum Senden von Information über den festgelegten, vom UE verwendeten Kommunikationsmodus zum UE und **dadurch gekennzeichnet, dass**
    das Verarbeitungsmodul ferner dafür ausgelegt ist, falls sich ein Downlink-Signal in D2D-Kommunikation und ein Downlink-Signal in zellulärer Kommunikation an einer Zeitdomänenposition einer Ressource überlappen, einen dem Downlink-Signal in zellulärer Kommunikation entsprechenden Subframe zu verlagern, sodass das Downlink-Signal in D2D-Kommunikation und das Downlink-Signal in zellulärer Kommunikation an unterschiedlichen Zeitdomänenpositionen der Ressource eingestellt sind; und
    das Sendemodul ferner ausgelegt ist zum Senden einer Downlink-Signal-Subframe-Versatzangabe zum UE, wobei die Downlink-Signal-Subframe-Versatzangabe verwendet wird, um das UE zu benachrichtigen, dass der dem Downlink-Signal in zellulärer Kommunikation entsprechende Subframe verlagert worden ist.

2.  Basisstation nach Anspruch 1, wobei das Verarbeitungsmodul ferner dafür ausgelegt ist, falls ein Attribut eines derzeit durch das UE durchgeführten Dienstes eine erste Schaltbedingung erfüllt, festzulegen, dass das UE in den durch die Kommunikationsmodus-Anforderungsangabe angegebenen Kommunikationsmodus umschalten kann; oder
    das Verarbeitungsmodul ferner dafür ausgelegt ist, falls ein Attribut eines derzeit durch das UE durchgeführten Dienstes und eine voreingestellte Dienstpriorität eine zweite Schaltbedingung erfüllen, festzulegen, dass das UE in den durch die Kommunikationsmodus-Anforderungsangabe angegebenen Kommunikationsmodus umschalten kann.

3.  Basisstation nach Anspruch 1 oder 2, wobei das Empfangsmodul ausgelegt ist zum Empfangen durch das UE gesendeten Nachricht über den Abschluss der Verbindungseinstellung der Steuerung funktechnischer Ressourcen, RRC, wobei die Nachricht über den Abschluss der RRC-Verbindungseinstellung eine Entdeckungssignal-Empfangsangabe umfasst und die Entdeckungssignal-Empfangsangabe verwendet wird, um anzugeben, dass das UE D2D-Kommunikation durchführt; und
    das Verarbeitungsmodul im Einzelnen ausgelegt ist zum Festlegen gemäß der Entdeckungssignal-Empfangsangabe, dass der vom UE verwendete Kommunikationsmodus zelluläre Kommunikation ist.

4.  Basisstation nach einem der Ansprüche 1 bis 3, wobei das Empfangsmodul ferner ausgelegt ist zum Empfangen einer durch das UE gesendeten Uplink-Signal-Subframe-Versatzangabe, wobei die Uplink-Signal-Subframe-Versatzangabe verwendet wird, um anzugeben, dass, wenn sich ein Uplink-Signal in D2D-Kommunikation und ein Uplink-Signal in zellulärer Kommunikation an einer Zeitdomänenposition einer Ressource überlappen, das UE einen dem Uplink-Signal in zellulärer Kommunikation entsprechenden Subframe verlagert hat, sodass das Uplink-Signal in D2D-Kommunikation und das Uplink-Signal in zellulärer Kommunikation an unterschiedlichen Zeitdomänenpositionen der Ressource eingestellt sind; und
    das Empfangsmodul ferner ausgelegt ist zum Empfangen des Uplink-Signals in D2D-Kommunikation und/oder des Uplink-Signals in zellulärer Kommunikation gemäß der Uplink-Signal-Subframe-Versatzangabe an den unterschiedlichen Zeitdomänenpositionen der Ressource.

5.  Benutzer-Equipment, UE, umfassend:

    ein Sendemodul (202), ausgelegt zum Senden einer Kommunikationsmodus-Anforderungsangabe zu einer Basisstation, wobei
    die Kommunikationsmodus-Anforderungsangabe verwendet wird, um einen Kommunikationsmodus anzugeben, den das UE verwenden soll, und der Kommunikationsmodus Gerät-zu-Gerät-, D2D-, -Kommunikation oder zelluläre Kommunikation umfasst;
    ein Empfangsmodul (200), ausgelegt zum Empfangen von Information, die durch die Basisstation gesendet wird und die einen festgelegten, von dem UE verwendeten Kommunikationsmodus betrifft, wobei die Information durch die Basisstation gemäß der Kommunikationsmodus-Anforderungsangabe festgelegt wird und die Information dem Kommunikationsmodus entspricht, der vom UE verwendet wird und der durch die Basisstation festgelegt wird;

ein Verarbeitungsmodul (201), ausgelegt zum Durchführen von Kommunikation mittels Verwendung des der Information entsprechenden Kommunikationsmodus;

und **dadurch gekennzeichnet, dass**

das Verarbeitungsmodul ferner dafür ausgelegt ist, falls sich ein Uplink Signal in D2D-Kommunikation und ein Uplink-Signal in zellulärer Kommunikation an einer Zeitdomänenposition einer Ressource überlappen, einen dem Uplink-Signal in zellulärer Kommunikation entsprechenden Subframe zu verlagern, sodass das Uplink-Signal in D2D-Kommunikation und das Uplink-Signal in zellulärer Kommunikation an unterschiedlichen Zeitdomänenpositionen der Ressource eingestellt sind; und

das Sendemodul ferner ausgelegt ist zum Senden einer Uplink-Signal-Subframe-Versatzangabe zur Basisstation, wobei die Uplink-Signal-Subframe-Versatzangabe verwendet wird, um anzugeben, dass der dem Uplink-Signal in zellulärer Kommunikation entsprechende Subframe verlagert worden ist.

6. Benutzer-Equipment nach Anspruch 5, wobei das Verarbeitungsmodul ferner ausgelegt ist zum Aktualisieren der Kommunikationsstatusinformation, wobei die Kommunikationsstatusinformation verwendet wird, um einen Kommunikationsmodus anzugeben, den das UE verwenden soll.

7. Benutzer-Equipment nach Anspruch 5 oder 6, wobei das Sendemodul ferner ausgelegt ist zum Senden einer Nachricht über den Abschluss der Verbindungseinstellung der Steuerung funktechnischer Ressourcen, RRC, zur Basisstation, wobei die Nachricht über den Abschluss der RRC-Verbindungseinstellung eine Entdeckungssignal-Empfangsangabe umfasst und die Entdeckungssignal-Empfangsangabe verwendet wird, um anzugeben, dass das UE D2D-Kommunikation durchführt; und

das Verarbeitungsmodul im Einzelnen ausgelegt ist zum Empfangen der Information, die von der Basisstation gesendet wird und die den vom UE verwendeten festgelegten Kommunikationsmodus betrifft, wobei die Information zellulärer Kommunikation entspricht.

8. Benutzer-Equipment nach einem der Ansprüche 5 bis 7, wobei das Empfangsmodul ferner ausgelegt ist zum Empfangen einer von der Basisstation gesendeten Downlink-Signal-Subframe-Versatzangabe, wobei die Downlink-Signal-Subframe-Versatzangabe verwendet wird, um anzugeben, dass, wenn sich ein Downlink-Signal in D2D-Kommunikation und ein Downlink-Signal in zellulärer Kommunikation an einer Zeitdomänenposition einer Ressource überlappen, die Basisstation einen dem Downlink-Signal in zellulärer Kommunikation entsprechenden Subframe verlagert hat, sodass das Downlink-Signal in D2D-Kommunikation und das Downlink-Signal in zellulärer Kommunikation an unterschiedlichen Zeitdomänenpositionen der Ressource eingestellt sind; und

das Empfangsmodul ferner ausgelegt ist zum Empfangen des Downlink-Signals in D2D-Kommunikation und/oder des Uplink-Signals in zellulärer Kommunikation gemäß der Downlink-Signal-Subframe-Versatzangabe an den unterschiedlichen Zeitdomänenpositionen der Ressource.

9. Coexistenzverfahren für ein Entdeckungssignal und ein zelluläres Signal, umfassend:

Senden (400) einer Kommunikationsmodus-Anforderungsangabe durch Benutzer-Equipment, UE, zu einer Basisstation, wobei

die Kommunikationsmodus-Anforderungsangabe verwendet wird, um einen Kommunikationsmodus anzugeben, den das UE verwenden soll, und der Kommunikationsmodus Gerät-zu-Gerät-, D2D-, -Kommunikation oder zelluläre Kommunikation umfasst;

Empfangen (401) von Information, die von der Basisstation gesendet wird und die einen von dem UE verwendeten festgelegten Kommunikationsmodus betrifft, durch das UE, wobei die Information von der Basisstation entsprechend der Kommunikationsmodus-Anforderungsangabe festgelegt wird und die Information dem Kommunikationsmodus entspricht, der vom UE verwendet wird und der durch die Basisstation festgelegt wird;

Durchführen (402) von Kommunikation durch das UE unter Verwendung des der Information entsprechenden Kommunikationsmodus; und **gekennzeichnet durch** Empfangen einer durch die Basisstation gesendeten Downlink-Signal-Subframe-Versatzangabe, wobei die Downlink-Signal-Subframe-Versatzangabe verwendet wird, um anzugeben, dass, wenn sich ein Downlink-Signal in D2D-Kommunikation und ein Downlink-Signal in zellulärer Kommunikation an einer Zeitdomänenposition einer Ressource überlappen, die Basisstation einen dem Downlink-Signal in zellulärer Kommunikation entsprechenden Subframe verlagert hat, sodass das Downlink-Signal in D2D-Kommunikation und das Downlink-Signal in zellulärer Kommunikation an unterschiedlichen Zeitdomänenpositionen der Ressource eingestellt sind; und

Empfangen des Downlink-Signals in D2D-Kommunikation und/oder des Downlink-Signals in zellulärer Kommunikation gemäß der Downlink-Signal-Subframe-Versatzangabe an unterschiedlichen Zeitdomänenpositionen der Ressource.

**10.** Verfahren nach Anspruch 9 vor dem Senden einer Kommunikationsmodus-Anforderungsangabe durch Benutzer-Equipment UE zu einer Basisstation, ferner umfassend:
Aktualisieren von Kommunikationsstatusinformation durch das UE, wobei die Kommunikationsstatusinformation verwendet wird, um einen Kommunikationsmodus anzugeben, den das UE verwenden soll.

**11.** Verfahren nach Anspruch 9 oder 10, wobei das Senden einer Kommunikationsmodus-Anforderungsangabe durch Benutzer-Equipment UE zu einer Basisstation umfasst:

Senden einer Nachricht über den Abschluss der Verbindungseinstellung der Steuerung funktechnischer Ressourcen, RRC, durch das UE zur Basisstation, wobei die Nachricht über den Abschluss der RRC-Verbindungseinstellung eine Entdeckungssignal-Empfangsangabe umfasst und die Entdeckungssignal-Empfangsangabe verwendet wird, um anzugeben, dass das UE D2D-Kommunikation durchführt; und
das Empfangen von Information durch das UE, die durch die Basisstation gesendet wird und die einen vom UE verwendeten festgelegten Kommunikationsmodus betrifft, umfasst:
Empfangen der Information, die von der Basisstation gesendet wird und die den vom UE verwendeten festgelegten Kommunikationsmodus betrifft, durch das UE, wobei die Information zellulärer Kommunikation entspricht.

**12.** Verfahren nach einem der Ansprüche 9 bis 11, ferner umfassend:

falls sich ein Uplink Signal in D2D-Kommunikation und ein Uplink-Signal in zellulärer Kommunikation an einer Zeitdomänenposition einer Ressource überlappen, Versetzen eines dem Uplink-Signal in zellulärer Kommunikation entsprechenden Subframes, sodass das Uplink-Signal in D2D-Kommunikation und das Uplink-Signal in zellulärer Kommunikation an unterschiedlichen Zeitdomänenpositionen der Ressource eingestellt sind; und
Senden einer Uplink-Signal-Subframe-Versatzangabe zur Basisstation, wobei die Uplink-Signal-Subframe-Versatzangabe verwendet wird, um anzugeben, dass der dem Uplink-Signal in zellulärer Kommunikation entsprechende Subframe verlagert worden ist.

**Revendications**

**1.** Station de base, comprenant :

un module de réception (100), configuré pour recevoir une indication de requête de mode de communication envoyée par un équipement utilisateur, UE,
l'indication de requête de mode de communication servant à indiquer un mode de communication devant être utilisé par l'UE et le mode de communication comprenant une communication de dispositif à dispositif, D2D, ou une communication cellulaire ;
un module de traitement (101), configuré pour déterminer, selon l'indication de requête de mode de communication, un mode de communication utilisé par l'UE ;
un module d'envoi (102), configuré pour envoyer à l'UE des informations concernant le mode de communication déterminé utilisé par l'UE ; et **caractérisée en ce que** :

le module de traitement est configuré en outre pour : si un signal en voie descendante dans une communication D2D et un signal en voie descendante dans une communication cellulaire se chevauchent à un emplacement, dans le domaine temporel, d'une ressource, déplacer une sous-trame correspondant au signal en voie descendante dans la communication cellulaire de façon à positionner le signal en voie descendante dans la communication D2D et le signal en voie descendante dans la communication cellulaire à des emplacements différents, dans le domaine temporel, de la ressource ; et
le module d'envoi est configuré en outre pour envoyer une indication de déplacement de sous-trame de signal en voie descendante à l'UE, l'indication de déplacement de sous-trame de signal en voie descendante servant à notifier à l'UE que la sous-trame correspondant au signal en voie descendante dans la communication cellulaire a été déplacée.

**2.** Station de base selon la revendication 1, dans laquelle le module de traitement est configuré en outre pour : si un attribut d'un service actuellement exécuté par l'UE remplit une première condition de commutation, déterminer que l'UE peut commuter sur le mode de communication indiqué par l'indication de requête de mode de communication ; ou le module de traitement est configuré en outre pour : si un attribut d'un service actuellement exécuté par l'UE et une priorité de service préétablie remplissent une deuxième condition de commutation, déterminer que l'UE peut commuter sur le mode de communication indiqué par l'indication de requête de mode de communication.

**3.** Station de base selon la revendication 1 ou 2, dans laquelle le module de réception est configuré pour recevoir un message d'achèvement d'établissement de connexion de commande de ressources radio, RRC, envoyé par l'UE, le message d'achèvement d'établissement de connexion RRC comprenant une indication de réception de signal de découverte et l'indication de réception de signal de découverte servant à indiquer que l'UE exécute une communication D2D ; et
le module de traitement est plus particulièrement configuré pour déterminer, selon l'indication de réception de signal de découverte, que le mode de communication utilisé par l'UE est une communication cellulaire.

**4.** Station de base selon l'une quelconque des revendications 1 à 3, dans laquelle le module de réception est configuré en outre pour recevoir une indication de déplacement de sous-trame de signal en voie montante envoyée par l'UE, l'indication de déplacement de sous-trame de signal en voie montante servant à indiquer que, lorsqu'un signal en voie montante dans une communication D2D et un signal en voie montante dans une communication cellulaire se chevauchent à un emplacement, dans le domaine temporel, d'une ressource, l'UE a déplacé une sous-trame correspondant au signal en voie montante dans la communication cellulaire de façon à positionner le signal en voie montante dans la communication D2D et le signal en voie montante dans la communication cellulaire à des emplacements différents, dans le domaine temporel, de la ressource ; et
le module de réception est configuré en outre pour recevoir, aux emplacements différents, dans le domaine temporel, de la ressource, le signal en voie montante dans la communication D2D et/ou le signal en voie montante dans la communication cellulaire selon l'indication de déplacement de sous-trame de signal en voie montante.

**5.** Équipement utilisateur, UE, comprenant :

un module d'envoi (202), configuré pour envoyer une indication de requête de mode de communication à une station de base,
l'indication de requête de mode de communication servant à indiquer un mode de communication devant être utilisé par l'UE et le mode de communication comprenant une communication de dispositif à dispositif, D2D, ou une communication cellulaire ;
un module de réception (200), configuré pour recevoir des informations envoyées par la station de base et concernant un mode de communication déterminé utilisé par l'UE, les informations étant déterminées par la station de base selon l'indication de requête de mode de communication et les informations correspondant au mode de communication utilisé par l'UE et déterminé par la station de base ;
un module de traitement (201), configuré pour exécuter une communication à l'aide du mode de communication correspondant aux informations ; et **caractérisé en ce que** :

le module de traitement est configuré en outre pour : si un signal en voie montante dans une communication D2D et un signal en voie montante dans une communication cellulaire se chevauchent à un emplacement, dans le domaine temporel, d'une ressource, déplacer une sous-trame correspondant au signal en voie montante dans la communication cellulaire de façon à positionner le signal en voie montante dans la communication D2D et le signal en voie montante dans la communication cellulaire à des emplacements différents, dans le domaine temporel, de la ressource ; et
le module d'envoi est configuré en outre pour envoyer une indication de déplacement de sous-trame de signal en voie montante à la station de base, l'indication de déplacement de sous-trame de signal en voie montante servant à indiquer que la sous-trame correspondant au signal en voie montante dans la communication cellulaire a été déplacée.

**6.** Équipement utilisateur selon la revendication 5, dans lequel le module de traitement est configuré en outre pour mettre à jour des informations d'état de communication, les informations d'état de communication servant à indiquer un mode de communication devant être utilisé par l'UE.

**7.** Équipement utilisateur selon la revendication 5 ou 6, dans lequel le module d'envoi est configuré en outre pour envoyer un message d'achèvement d'établissement de connexion de commande de ressources radio, RRC, à la station de base, le message d'achèvement d'établissement de connexion RRC comprenant une indication de réception de signal de découverte et l'indication de réception de signal de découverte servant à indiquer que l'UE exécute une communication D2D ; et

le module de réception est plus particulièrement configuré pour recevoir les informations envoyées par la station de base et concernant le mode de communication déterminé utilisé par l'UE, les informations correspondant à une communication cellulaire.

8. Équipement utilisateur selon l'une quelconque des revendications 5 à 7, dans lequel le module de réception est configuré en outre pour recevoir une indication de déplacement de sous-trame de signal en voie descendante envoyée par la station de base, l'indication de déplacement de sous-trame de signal en voie descendante servant à indiquer que, lorsqu'un signal en voie descendante dans une communication D2D et un signal en voie descendante dans une communication cellulaire se chevauchent à un emplacement, dans le domaine temporel, d'une ressource, la station de base a déplacé une sous-trame correspondant au signal en voie descendante dans la communication cellulaire de façon à positionner le signal en voie descendante dans la communication D2D et le signal en voie descendante dans la communication cellulaire à des emplacements différents, dans le domaine temporel, de la ressource ; et

le module de réception est configuré en outre pour recevoir, aux emplacements différents, dans le domaine temporel, de la ressource, le signal en voie descendante dans la communication D2D et/ou le signal en voie descendante dans la communication cellulaire selon l'indication de déplacement de sous-trame de signal en voie descendante.

9. Procédé de coexistence pour un signal de découverte et un signal cellulaire, comprenant :

l'envoi (400), par un équipement utilisateur, UE, d'une indication de requête de mode de communication à une station de base,

l'indication de requête de mode de communication servant à indiquer un mode de communication devant être utilisé par l'UE et le mode de communication comprenant une communication de dispositif à dispositif, D2D, ou une communication cellulaire ;

la réception (401), par l'UE, d'informations envoyées par la station de base et concernant un mode de communication déterminé utilisé par l'UE, les informations étant déterminées par la station de base selon l'indication de requête de mode de communication et les informations correspondant au mode de communication utilisé par l'UE et déterminé par la station de base ;

l'exécution (402), par l'UE, d'une communication à l'aide du mode de communication correspondant aux informations ; et **caractérisé par** :

la réception d'une indication de déplacement de sous-trame de signal en voie descendante envoyée par la station de base, l'indication de déplacement de sous-trame de signal en voie descendante servant à indiquer que, lorsqu'un signal en voie descendante dans une communication D2D et un signal en voie descendante dans une communication cellulaire se chevauchent à un emplacement, dans le domaine temporel, d'une ressource, la station de base a déplacé une sous-trame correspondant au signal en voie descendante dans la communication cellulaire de façon à positionner le signal en voie descendante dans la communication D2D et le signal en voie descendante dans la communication cellulaire à des emplacements différents, dans le domaine temporel, de la ressource ; et

la réception, à des emplacements différents, dans le domaine temporel, de la ressource, du signal en voie descendante dans la communication D2D et/ou du signal en voie descendante dans la communication cellulaire selon l'indication de déplacement de sous-trame de signal en voie descendante.

10. Procédé selon la revendication 9, comprenant en outre, préalablement à l'envoi, par un équipement utilisateur, UE, d'une indication de requête de mode de communication à une station de base :

la mise à jour, par l'UE, d'informations d'état de communication, les informations d'état de communication servant à indiquer un mode de communication devant être utilisé par l'UE.

11. Procédé selon la revendication 9 ou 10, dans lequel l'envoi, par un équipement utilisateur, UE, d'une indication de requête de mode de communication à une station de base comprend :

l'envoi, par l'UE, d'un message d'achèvement d'établissement de connexion de commande de ressources radio, RRC, à la station de base, le message d'achèvement d'établissement de connexion RRC comprenant une indication de réception de signal de découverte et l'indication de réception de signal de découverte servant à indiquer que l'UE exécute une communication D2D ; et

la réception, par l'UE, d'informations envoyées par la station de base et concernant un mode de communication déterminé utilisé par l'UE comprend :

la réception, par l'UE, des informations envoyées par la station de base et concernant le mode de communication déterminé utilisé par l'UE, les informations correspondant à une communication cellulaire.

12. Procédé selon l'une quelconque des revendications 9 à 11, comprenant en outre :

si un signal en voie montante dans une communication D2D et un signal en voie montante dans une communication cellulaire se chevauchent à un emplacement, dans le domaine temporel, d'une ressource, le déplacement d'une sous-trame correspondant au signal en voie montante dans la communication cellulaire de façon à positionner le signal en voie montante dans la communication D2D et le signal en voie montante dans la communication cellulaire à des emplacements différents, dans le domaine temporel, de la ressource ; et l'envoi d'une indication de déplacement de sous-trame de signal en voie montante à la station de base, l'indication de déplacement de sous-trame de signal en voie montante servant indiquer que la sous-trame correspondant au signal en voie montante dans la communication cellulaire a été déplacée.

100
Receiving
module

101
Processing
module

102
Sending
module

FIG. 1

200
Receiving
module

201
Processing
module

202
Sending
module

FIG. 2

301
Processing
module

302
Sending
module

FIG. 3

400
Receiving
module

401
Communications
module

FIG. 4

500
Receiver

501
Processor

502
Transmitter

FIG. 5

600                        601                          602

| Receiver | | Processor | | Transmitter |

FIG. 6

701                          702

| Processor | | Transmitter |

FIG. 7

801                          802

| Processor |    | Memory |

803

FIG. 8

| Receive a communications mode request indication sent by user equipment UE | 100 |

| Determine, according to the communications mode request indication, a communications mode used by the UE | 101 |

| Send, to the UE, information about the determined communications mode used by the UE | 102 |

FIG. 9

FIG. 10

Receive a report message sent by user equipment UE, where the report message includes a communications mode request indication

⟍⟋ 100

If an attribute of a service currently performed by the UE and the preset service priority meet a second switching condition, determine that the UE can switch to a communications mode indicated by the communications mode request indication

⟍⟋ 104

Determine, according to the communications mode request indication, a communications mode used by the UE, where the communications mode used by the UE is D2D communication or cellular communication

⟍⟋ 101

Send a report acknowledgement message to the UE, where the report acknowledgement message includes the communications mode used by the UE

⟍⟋ 102

FIG. 11

If a downlink signal in D2D communication and a downlink signal in cellular communication overlap at a time domain location of a resource, displace a subframe corresponding to the downlink signal in cellular communication, so that the downlink signal in D2D communication and the downlink signal in cellular communication are set at different time domain locations of the resource

⟍⟋ 200

Send a downlink signal subframe displacement indication to the UE, where the downlink signal subframe displacement indication is used to notify the UE that the subframe corresponding to the downlink signal in cellular communication has been displaced, so that the UE receives, at the different time domain locations of the resource, the downlink signal in D2D communication and/or the downlink signal in cellular communication according to the downlink signal subframe displacement indication

⟍⟋ 201

FIG. 12

Receive an uplink signal subframe displacement indication sent by the UE, where the uplink signal subframe displacement indication is used to indicate that when an uplink signal in D2D communication and an uplink signal in cellular communication overlap at a time domain location of a resource, the UE has displaced a subframe corresponding to the uplink signal in cellular communication, so that the uplink signal in D2D communication and the uplink signal in cellular communication are set at different time domain locations of the resource

300

Receive, at the different time domain locations of the resource, the uplink signal in D2D communication and/or the uplink signal in cellular communication according to the uplink signal subframe displacement indication

301

FIG. 13

Cycle D of a discovery signal

Dis_F

Dis_F + Nc

Quantity Nc of frames in which the discovery signal lasts

Subframes

0  1  2  3  4  5  6  7  8  9

SPS DL subframe

Cycle of an SPS DL/UL signal

The discovery signal and the SPS signal overlap

FIG. 14

Cycle D of a discovery signal

Dis_F

Dis_F + Nc

Quantity Nc of frames in which
the discovery signal lasts

Subframes

Be translated
to a next frame

0  1  2  3  4  5  6  7  8  9

SPS DL
subframe

Cycle of an SPS
DL/UL signal

The discovery signal and
the SPS signal overlap

FIG. 15

Cycle D of a discovery signal

Dis_F

Dis_F + Nc

Quantity Nc of frames in which
the discovery signal lasts

Be translated to a
subframe closely
located after the
discovery signal

Subframes

0  1  2  3  4  5  6  7  8  9

SPS DL
subframe

Cycle of an
SPS DL/UL
signal

FIG. 16

User equipment UE sends a communications mode request indication to a base station ⟍ 400

The UE receives information that is sent by the base station and is about a determined communications mode used by the UE ⟍ 401

The UE performs communication by using the communications mode corresponding to the information ⟍ 402

FIG. 17

The UE updates communication status information, where the communication status information is used to indicate a communications mode that the UE needs to use ⟍ 403

The user equipment UE sends a communications mode request indication to a base station ⟍ 400

The UE receives information that is sent by the base station and is about a determined communications mode used by the UE ⟍ 401

The UE performs communication by using the communications mode corresponding to the information ⟍ 402

FIG. 18

Determine whether a time domain resource corresponding to a paging frame and a time domain resource corresponding to a discovery frame overlap ⟍ 500

If the time domain resource corresponding to the paging frame and the time domain resource corresponding to the discovery frame overlap, set the time domain resource corresponding to the paging frame and the time domain resource corresponding to the discovery frame to be non-overlapping ⟍ 501

Deliver reception information corresponding to the discovery frame to user equipment UE, or deliver reception information corresponding to the paging frame to the UE, where the reception information corresponding to the discovery frame is used to instruct the UE to perform only discovery communication on the time domain resource corresponding to the discovery frame, and the reception information corresponding to the paging frame is used to instruct the UE to perform only paging communication on the time domain resource corresponding to the paging frame ⟍ 502

FIG. 19

User equipment UE receives reception information that is corresponding to the discovery frame and is delivered by the base station, where the reception information corresponding to the discovery frame is used to instruct the UE to perform only discovery communication on a time domain resource corresponding to the discovery frame
600

The UE performs discovery communication on the time domain resource corresponding to the discovery frame
601

The UE receives reception information that is corresponding to a paging frame and is delivered by the base station, where the reception information corresponding to the paging frame is used to instruct the UE to perform only paging communication on a time domain resource corresponding to the paging frame
602

The UE performs paging communication on the time domain resource corresponding to the paging frame
603

FIG. 20

**EP 3 185 630 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2011123516 A2
- WO 2013171114 A1
- GB 2506176 A